# EUROPEAN PATENT APPLICATION

(11) **EP 4 598 163 A1**
(43) Date of publication of application: **06.08.2025**
(21) Application number: 22959792.7
(22) Date of filing: 26.09.2022
(51) Int. Cl.: H04W 64/00

(54) **ROLE AUTHORIZATION METHOD/APPARATUS/DEVICE FOR USER EQUIPMENT (UE), AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Stöckeler, Ferdinand
(86) International application number: PCT/CN2022/121514
(87) International publication number: WO 2024/065140

(57) **Abstract**

Provided in the present invention are a role authorization method/apparatus/device for a UE, and a storage medium. The method comprises: receiving a discovery request message, which is sent by a first UE and/or a second UE, wherein the discovery request message is used for requesting the authorization of a role for the first UE and/or the second UE; and sending a discovery response message to the first UE and/or the second UE, wherein the discovery response message comprises a role which is determined for the first UE and/or the second UE by a network device. Provided in the present invention is a method for authorizing a role for a UE in a service that the UE requests to discover, which method is used for correctly authorizing a role for a UE, so as to improve the accuracy of service execution, and also improve the information security.

## Description

### FIELD

The present invention generally relates to the field of communication technology, and more particularly, to a method/apparatus/device for authorizing a role of a UE and a storage medium.

### BACKGROUND

In a communication system, when performing a ranging service and/or a sidelink (SL) positioning service, multiple user equipment (UE) are usually required to play different roles to participate in completing the service, where the UE roles may include an SL reference UE, a target UE, an assistant UE, a located UE, a sidelink positioning server UE, and an SL positioning client UE.

One UE may simultaneously support multiple roles for the ranging service and/or the sidelink positioning service. For example, if a UE has an ability of sending a location signal, it may be used as a reference UE. If the UE further has an ability of calculating a location, it may be used as a server UE. In a practice scenario, it may happen that the UE plays an inappropriate role in a service, that is, the UE is not allowed or capable to play the role in the service. For example, a UE has a ranging capability, but it is not allowed to play the role of the reference UE in ranging service 1. When it plays the role of the reference UE in ranging service 1, an accuracy of the ranging service may be affected and unsafe problem such as information leakage may be caused.

### SUMMARY

Method/apparatus/device for authorizing a role of a UE and a storage medium are provided in the present invention to correctly authorize the role for the UE in different services to ensure an accuracy in service execution and information security.

In a first aspect, an embodiment of the present invention provides a method for authorizing a role of a UE, which is performed by a network device and includes: receiving a discovery request message sent by a first UE and/or a second UE, where the discovery request message is used to request an authorized role for the first UE and/or the second UE; and sending a discovery response message to the first UE and/or the second UE, where the discovery response message includes a role determined by the network device for the first UE and/or the second UE.

In the present invention, the network device receives the discovery request message sent by the first UE and/or the second UE, and the discovery request message is used to request the authorized role for the first UE and/or the second UE. The network device sends the discovery response message to the first UE and/or the second UE, and the discovery response message includes the role determined by the network device for the first UE and/or the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

In a second aspect, an embodiment of the present invention provides a method for authorizing a role of a UE, which is performed by a first UE and includes: sending a discovery request message to a network device, where the discovery request message is used to request an authorized role for the first UE; and receiving a discovery response message sent by the network device, where the discovery response message includes a role determined by the network device for the first UE.

In a third aspect, an embodiment of the present invention provides a method for authorizing a role of a UE, which is performed by a second UE and includes: sending a discovery request message to a network device, where the discovery request message is used to request an authorized role for the second UE; and receiving a discovery response message sent by the network device, where the discovery response message includes a role determined by the network device for the second UE.

In a fourth aspect, an embodiment of the present invention provides a method for authorizing a role of a UE, which is performed by a direct discovery name management function (DDNMF) network element or a proximity service key management function (PKMF) network element of a first UE and includes: receiving a discovery request message sent by the first UE, where the discovery request message is used to request an authorized role for a service requested to be discovered by the first UE; sending a first authorization request message to a server or a unified data management (UDM) network element according to the discovery request message; receiving a first authorization response message sent by the server or the UDM network element, where the first authorization response message includes a role of the first UE determined by the server or the UDM network element; and sending a discovery response message to the first UE, where the discovery response message includes the role of the first UE.

In a fifth aspect, an embodiment of the present invention provides a method for authorizing a role of a UE, which is performed by a DDNMF network element or a PKMF network element of a second UE and includes: receiving a discovery request message sent by the second UE, where the discovery request message is used to request an authorized role for a service requested to be discovered by the second UE; sending a first authorization request message to a server or a UDM network element according to the discovery request message; receiving a first authorization response message sent by the server or the UDM network element, where the first authorization response message includes a role of the second UE determined by the server or the UDM network element; determining security material corresponding to the service requested to be discovered by the second UE; and sending a discovery response message to the second UE, where the discovery response message includes the role of the second UE.

In a sixth aspect, an embodiment of the present invention provides a method for authorizing a role of a UE, which is performed by a server or a UDM and includes: receiving a first authorization request message sent by a DDNMF network element or a PKMF network element of a first UE and/or a second UE, where the first authorization request message is used to request an authorized role for a service requested to be discovered by the first UE and/or the second UE; determining a role of the first UE and/or the second UE according to the first authorization request message; and sending a first authorization response message to the DDNMF network element or the PKMF network element of the first UE and/or the second UE, where the first authorization response message includes the role of the first UE and/or the second UE.

In a seventh aspect, an embodiment of the present invention provides a communication device, including: a transceiving module configured to: receive a discovery request message sent by a first UE and/or a second UE, where the discovery request message is used to request an authorized role for the first UE and/or the second UE; and send a discovery response message to the first UE and/or the second UE, where the discovery response message includes a role determined by the network device for the first UE and/or the second UE.

In an eighth aspect, an embodiment of the present invention provides a communication device, including: a transceiving module configured to: send a discovery request message to a network device, where the discovery request message is used to request an authorized role for the first UE; and receive a discovery response message sent by the network device, where the discovery response message includes a role determined by the network device for the first UE.

In a ninth aspect, an embodiment of the present invention provides a communication device, including: a transceiving module configured to a transceiving module configured to: send a discovery request message to a network device, where the discovery request message is used to request an authorized role for the second UE; and receive a discovery response message sent by the network device, where the discovery response message includes a role determined by the network device for the second UE.

In a tenth aspect, an embodiment of the present invention provides a communication device, including: a transceiving module configured to: receive a discovery request message sent by the first UE, where the discovery request message is used to request an authorized role for a service requested to be discovered by the first UE; send a first authorization request message to a server or a unified data management (UDM) network element according to the discovery request message; receive a first authorization response message sent by the server or the UDM network element, where the first authorization response message includes a role of the first UE determined by the server or the UDM network element; and send a discovery response message to the first UE, where the discovery response message includes the role of the first UE.

In an eleventh aspect, an embodiment of the present invention provides a communication device, including: a transceiving module configured to: receive a discovery request message sent by the second UE, where the discovery request message is used to request an authorized role for a service requested to be discovered by the second UE, send a first authorization request message to a server or a unified data management (UDM) network element according to the discovery request message, receive a first authorization response message sent by the server or the UDM network element, where the first authorization response message includes a role of the second UE determined by the server or the UDM network element; and a processing module configured to determine security material corresponding to the service requested to be discovered by the second UE. The transceiving module is further configured to send a discovery response message to the second UE, where the discovery response message includes the role of the second UE.

In a twelfth aspect, an embodiment of the present invention provides a communication device, including: a transceiving module configured to receive a first authorization request message sent by a DDNMF network element or a PKMF network element of a first UE and/or a second UE, where the first authorization request message is used to request an authorized role for a service requested to be discovered by the first UE and/or the second UE; and a processing module configured to determine a role of the first UE and/or the second UE according to the first authorization request message. The transceiving module is further configured to send a first authorization response message to the DDNMF network element or the PKMF network element of the first UE and/or the second UE, where the first authorization response message includes the role of the first UE and/or the second UE.

In a thirteenth aspect, an embodiment of the present invention provides a communication device, which includes a processor. When the processor invokes a computer program in a memory, the method according to any one of the first aspect to the sixth aspect described above is implemented.

In a fourteenth aspect, an embodiment of the present invention provides a communication device, which includes a processor and a memory having stored therein a computer program. The processor is configured to execute the computer program stored in the memory, to cause the communication device to implement the method according to any one of the first aspect to the sixth aspect described above.

In a fifteenth aspect, an embodiment of the present invention provides a communication device, which includes a processor and an interface circuit. The interface circuit is configured to receive a code instruction and transmit the code instruction to the processor, and the processor is configured to run the code instruction to make the device implement the method according to any one of the first aspect to the sixth aspect described above.

In a sixteenth aspect, an embodiment of the present invention provides a communication system, which includes the communication device according to the seventh aspect to the communication device according to the twelfth aspect, or the communication device according to the thirteenth, fourteenth or fifteenth aspect.

In a seventeenth aspect, an embodiment of the present invention provides a computer-readable storage medium for storing instructions used by the above base station. The instructions, when executed, cause the terminal device to implement the method according to any one of the first aspect to the sixth aspect described above.

In an eighteenth aspect, the present invention further provides a computer program product, which includes a computer program that, when run on a computer, causes the computer to implement the method according to any one of the first aspect to the sixth aspect described above.

In a nineteenth aspect, the present invention provides a chip system, which includes at least one processor and an interface, for supporting a base station to implement functions involved in the method according to any one of the first aspect to the sixth aspect, for example, determining or processing at least one of data or information involved in the above method. In a possible design, the chip system further includes a memory for storing computer programs and data of the source secondary node. The chip system may consist of chips, or may include chips and other discrete devices.

In a twentieth aspect, the present invention provides a computer program that, when run on a computer, causes the computer to implement the method according to any one of the first aspect to the fifth aspect described above.

In a twenty-first aspect, the present invention provides a communication system including: a first UE configured to send a discovery request message; a second UE configured to send a discovery request message; a network device configured to send a discovery response message, where the discovery response message includes a role determined by the network device for the first UE and/or the second UE. The first UE is further configured to receive the discovery response message, where the discovery response message includes a role determined by the network device for the first UE. The second UE is further configured to receive the discovery response message, where the discovery response message includes the role determined by the network device for the second UE.

### BRIEF DESCRIPTION OF THE DRAWINGS

The above and/or additional aspects and advantages of the present invention will become apparent and more readily appreciated from the following descriptions of embodiments made with reference to the following drawings.
Fig. 1a and Fig. 1b are schematic diagrams of architectures of communication systems provided in an embodiment of the present invention.
Figs. 2a-2L are schematic flowcharts of a method for authorizing a role of a UE provided in an embodiment of the present invention.
Fig. 3 is a schematic flowchart of a method for authorizing a role of a UE provided in another embodiment of the present invention.
Fig. 4 is a schematic flowchart of a method for authorizing a role of a UE provided in yet another embodiment of the present invention.
Fig. 5 is a schematic flowchart of a method for authorizing a role of a UE provided in a further embodiment of the present invention.
Fig. 6 is a schematic flowchart of a method for authorizing a role of a UE provided in a further embodiment of the present invention.
Fig. 7 is a schematic flowchart of a method for authorizing a role of a UE provided in a further embodiment of the present invention.
Fig. 8 is a schematic flowchart of a method for authorizing a role of a UE provided in a further embodiment of the present invention.
Fig. 9 is a schematic flowchart of a method for authorizing a role of a UE provided in a further embodiment of the present invention.
Fig. 10 is a schematic flowchart of a method for authorizing a role of a UE provided in a further embodiment of the present invention.
Fig. 11 is a schematic flowchart of a method for authorizing a role of a UE provided in a further embodiment of the present invention.
Fig. 12 is a schematic flowchart of a method for authorizing a role of a UE provided in a further embodiment of the present invention.
Fig. 13 is a schematic flowchart of a method for authorizing a role of a UE provided in a further embodiment of the present invention.
Fig. 14 is a schematic flowchart of a method for authorizing a role of a UE provided in a further embodiment of the present invention.
Fig. 15 is a schematic flowchart of a method for authorizing a role of a UE provided in a further embodiment of the present invention.
Fig. 16 is a schematic flowchart of a method for authorizing a role of a UE provided in a further embodiment of the present invention.
Fig. 17 is a block diagram of a communication device provided in an embodiment of the present invention.
Fig. 18 is a block diagram of a communication device provided in an embodiment of the present invention.
Fig. 19 is a block diagram of a communication device provided in an embodiment of the present invention.
Fig. 20 is a block diagram of a communication device provided in an embodiment of the present invention.
Fig. 21a is a block diagram of a communication device provided in an embodiment of the present invention.
Fig. 21b is a block diagram of a communication device provided in an embodiment of the present invention.
Fig. 22 is a block diagram of a communication system provided in an embodiment of the present invention.
Fig. 23 is a block diagram of a communication device provided in an embodiment of the present invention.
Fig. 24 is a block diagram of a chip provided in an embodiment of the present invention.

### DETAILED DESCRIPTION

Reference will now be made in detail to illustrative embodiments, examples of which are illustrated in the accompanying drawings. The following description refers to the accompanying drawings in which the same reference numerals in different drawings represent the same or similar elements unless otherwise represented. The implementations set forth in the following description of illustrative embodiments do not represent all implementations consistent with embodiments of the present invention. Instead, they are merely examples of devices and methods consistent with some aspects of embodiments of the present invention as recited in the appended claims.

Terms used herein in embodiments of the present invention are only for the purpose of describing specific embodiments, but should not be construed to limit the embodiments of the present invention. As used in the embodiments of the present invention and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

Embodiments of the present invention are described in detail below, examples of which are shown in the accompanying drawings, where the same or similar reference numerals throughout represent the same or similar elements. The embodiments described below with reference to the accompanying drawings are examples and are used to explain the present invention, and should not be construed as limiting the present invention.

To facilitate understanding, the terms involved in the present invention are first introduced.

1. Unified data management (UDM) network element is a network element responsible for management of user identification, contract data, authentication data, and user service network element registration management (such as an access and mobility management function (AMF) network element or session management function (SMF) network element that currently provides service(s) to a terminal). For example, when the user switches the AMF to be visited, the UDM will further initiate a deregistration message to the old AMF, requesting the old AMF to delete user-related information).

In order to better understand a method for authorizing a role of a UE disclosed in embodiments of the present invention, a communication system to which the embodiments of the present invention is applicable is described below.

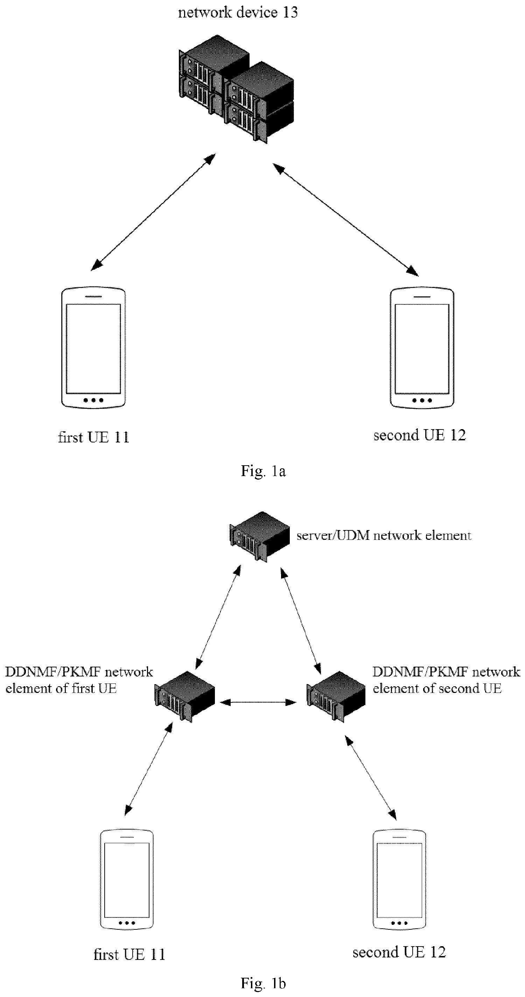

Referring to Fig. 1a, Fig. 1a is a schematic diagram of an architecture of a communication system provided in an embodiment of the present invention. As shown in Fig. 1a, the communication system may include, but is not limited to, one network device 13, and at least two UEs (such as a first UE 11 and a second UE 12).

It should be noted that the technical solutions of embodiments of the present invention may be applied to various communication systems, for example, a long term evolution (LTE) system, a 5th generation (5G) mobile communication system, a 5G new radio (NR) system, or other future new mobile communication systems.

The network device 13 may include, for example, an access network device (such as a base station) and a core network device. The core network device is a device deployed in the core network, and the core network element is a network element deployed in the core network. The functions of both are to provide user connection, user management, and service hosting, and to provide an interface to the external network as a bearer network.

The first UE11 and the second UE12 in the embodiments of the present invention are an entity for receiving or transmitting signals on a user side, such as a mobile phone. The terminal device may also be called a terminal, a user equipment (UE), a mobile station (MS), or a mobile terminal (MT). The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. The specific technology and the specific device form adopted by the terminal device are not limited in the embodiments of the present invention.

As shown in Fig. 1b, the core network device in the communication system may, for example, include a direct discovery name management function (DDNMF)/ProSe key management function (PKMF) network element of the first UE, a DDNMF/PKMF network element of the second UE, and a server/UDM network element.

The DDNMF/PKMF network element of the first UE and the DDNMF/PKMF network element of the second UE may be the same or different.

It can be understood that the communication system described in embodiments of the present invention is intended to illustrate the technical solutions of embodiments of the present invention more clearly, and does not constitute a limitation on the technical solutions provided by the embodiments of the present invention. Those skilled in the art will know that with an evolution of a system architecture and an emergence of a new service scenario, the technical solutions provided by the embodiments of the present invention are also applicable to similar technical problems.

The following describes in detail a method/apparatus/device for authorizing a role of a UE and a storage medium provided by the embodiments of the present invention with reference to the accompanying drawings.

It should be noted that naming of the following messages (including a request message, a response message, etc.) is only for convenience, and the naming does not constitute a limitation on the function of the message.

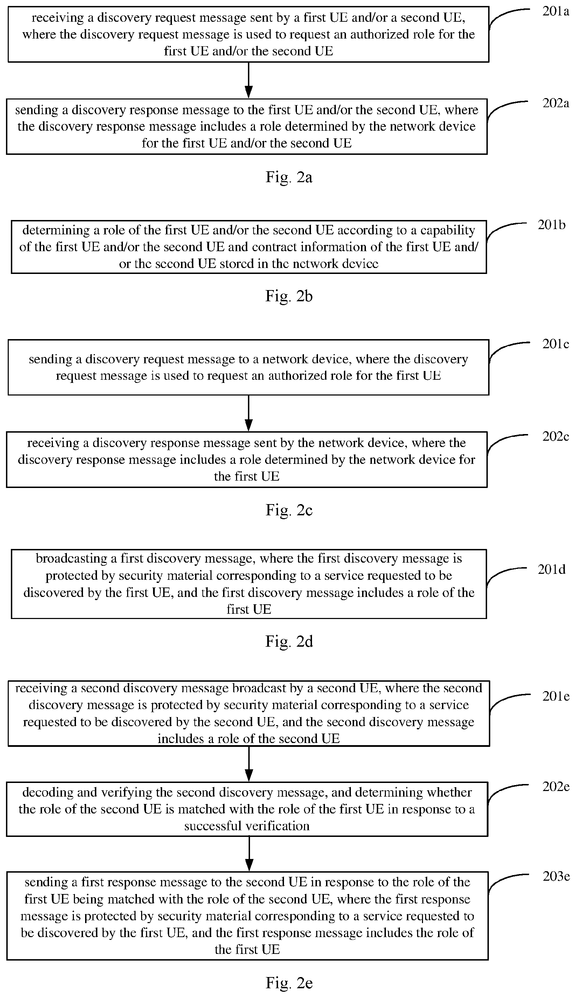

Fig. 2a is a flow chart of a method for authorizing a role of a UE provided in an embodiment of the present invention. The method is performed by a network device. As shown in Fig. 2a, the method for authorizing the role of the UE may include the following steps.

In step 201a, a discovery request message sent by a first UE and/or a second UE is received, where the discovery request message is used to request an authorized role for the first UE and/or the second UE.

In an embodiment of the present invention, the discovery request message sent by the first UE includes at least one of: an application user identifier (a ranging application user identifier (RAUID)) corresponding to the first UE; an identifier of a service requested to be discovered by the first UE; or a capability of the first UE.

In an embodiment of the present invention, the discovery request message sent by the second UE includes at least one of: an RAUID corresponding to the second UE; a service requested to be discovered by the second UE; or a capability of the second UE.

The RAUID is used to identify the UE so that the network device knows which UE sends the discovery request message.

The service requested to be discovered by the UE may be, for example, a ranging service and/or a sidelink positioning service.

The above-mentioned UE capability may be, for example, a ranging service capability supported by the UE and/or a sidelink positioning service capability supported by the UE. When the UE capabilities are different, the UE roles supported and implemented may be different. The UE roles may include, for example, a reference UE (such as an SL reference UE), a target UE, an assistant UE, a located UE, UE acted as a server (such as an SL positioning server UE), a client UE (such as an SL positioning client UE), and a ranging UE. The above-mentioned target UE may be a UE to be positioned or measured. The above-mentioned located UE may be a UE that requires to obtain a position of the target UE. The above-mentioned ranging UE may be a UE that requests to obtain a ranging distance with the target UE. Based on a position of the above-mentioned reference UE or a distance between the above-mentioned reference UE and the target UE, a position or ranging distance of the target UE is determined. The above-mentioned assistant UE may be a UE used to assist in forwarding message(s) in a ranging service or a sidelink positioning service. The above-mentioned UE acted as a server may be a UE exhibiting a positioning calculation capability or a ranging calculation capability. The above-mentioned client UE may be a UE that may act as a client in a ranging service or a sidelink positioning service.

On this basis, for example, when the UE supports a processing data capability (i.e., a data computing capability), the UE may support an achievable UE role such as UE acted as a server. When the UE does not support the processing data capability of, but supports a capability of sending and receiving positioning information and/or ranging information, the UE may support a UE role such as a reference UE or a target UE.

In step 202a: a discovery response message is sent to the first UE and/or the second UE, where the discovery response message includes a role determined by the network device for the first UE and/or the second UE.

The above-mentioned role of the UE is the role authorized by the network device for the UE. The role of the UE may be determined by the network device according to the UE's capability and the UE's contract information. The contract information may be a service agreement and/or UE subscription, and the contract information registers roles allowed for each UE in the ranging service and/or the sidelink positioning service. On this basis, when the network device determines the role based on the UE contract information, it may ensure that the authorized role determined for the UE is an allowed role, thus ensuring correct authorization of the role for the UE, and further ensuring accuracy for the UE when the service is performed based on the role of the UE.

Further, in an embodiment of the present invention, the discovery response message may further include security material, generated by the network device, for a service requested to be discovered by the first UE and/or the second UE. Security material corresponding to the service requested to be discovered by the first UE is the same as security material corresponding to the service requested to be discovered by the second UE. The security material is used to perform security protection on a subsequent process of the first UE discovering the second UE, to ensure that when the first UE transmits the role of the first UE in the subsequent discovery process, unrelated UE is unable to monitor or tamper with the role of the first UE, thus preventing the unrelated UE from impersonating the role of the first UE to deceive the opposite UE (i.e., the second UE) of the first UE, avoiding interference from other unrelated UEs in the subsequent service execution process, and improving the accuracy of the service execution and the information security. The unrelated UE includes, for example, a UE requesting a service different from the service requested to be discovered by the first UE and the second UE, a UE not requesting a service, a UE whose role is not authorized by the network device, a UE that has not obtained the security material from the network device, and the like.

Therefore, with the method for authorizing the role of the UE provided in the embodiments of the present invention, the network device receives the discovery request message sent by the first UE and/or the second UE, and the discovery request message is used to request the authorized role for the first UE and/or the second UE. The network device sends the discovery response message to the first UE and/or the second UE, and the discovery response message includes the role determined by the network device for the first UE and/or the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2b is a flow chart of a method for authorizing a role of a UE provided in an embodiment of the present invention. The method is performed by the network device. As shown in Fig. 2b, the method for authorizing the role of the UE may include the following steps.

In step 201b, a role of the first UE and/or the second UE is determined according to a capability of the first UE and/or the second UE and contract information of the first UE and/or the second UE stored in the network device.

As described above, the contract information registers roles allowed for individual UEs in the ranging service and/or the sidelink positioning service. On this basis, the network device may determine the roles allowed for one UE in the ranging service and/or sidelink positioning service by searching the contract information, and determine, with further considering the capability of the UE, the role of the UE among the allowed roles of the UE, where the determined role is supported by the UE's capability.

On this basis, a method for the network device to determine a role of the first UE is introduced as an example, and a method for determining the role of the second UE is similar.

Specifically, for example, if the service requested to be discovered by the two UEs is a ranging service, the network device may find out from the service protocol based on an identifier of the first UE that roles allowed for the first UE in the ranging service are a target UE and a server UE, and/or the network device may determine subscription(s) of the first UE based on the identifier of the first UE, and find out from the subscription(s) of the first UE that the roles allowed for the first UE in the sidelink positioning service are a target UE and a server UE. In this case, if the network device determines that the roles supported by the first UE in the ranging service are a target UE and a located UE according to the capability of the first UE, the network device may authorize the role of the first UE to be the target UE.

In addition, it should be noted that in an embodiment of the present invention, among the roles allowed for the first UE, if multiple roles are supported by the capabilities of the first UE, the network device may determine all of the multiple roles as the roles of the first UE, that is, the first UE may have multiple roles.

Therefore, with the method for authorizing the role of the UE provided in the embodiments of the present invention, the network device receives the discovery request message sent by the first UE and/or the second UE, and the discovery request message is used to request the authorized role for the first UE and/or the second UE. The network device sends the discovery response message to the first UE and/or the second UE, and the discovery response message includes the role determined by the network device for the first UE and/or the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2c is a flow chart of a method for authorizing a role of a UE provided in an embodiment of the present invention. The method is performed by a first UE. As shown in Fig. 2c, the method for authorizing the role of the UE may include the following steps.

In step 201c, a discovery request message is sent to a network device. The discovery request message is used to request an authorized role for the first UE.

In step 202c, a discovery response message sent by the network device is received. The discovery response message includes a role determined by the network device for the first UE.

For a detailed description of steps 201c to 202c reference may be made to the description of the above embodiments.

Therefore, with the method for authorizing the role of the UE provided in the embodiments of the present invention, the first UE may send the discovery request message to the network device. The discovery request message is used to request an authorized role for the first UE. The first UE may receive the discovery response message sent by the network device. The discovery response message includes the role determined by the network device for the first UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2d is a flow chart of a method for authorizing a role of a UE provided in an embodiment of the present invention. The method is performed by the first UE. As shown in Fig. 2d, the method for authorizing the role of the UE may include the following steps.

In step 201d, a first discovery message is broadcast. The first discovery message is protected by security material corresponding to a service requested to be discovered by the first UE, and the first discovery message includes a role of the first UE.

In an embodiment of the present invention, the first UE will broadcast the first discovery message protected by the security material corresponding to the service requested to be discovered by the first UE. Based on the fact that the security material corresponding to the service requested to be discovered by the second UE is the same as the security material corresponding to the service requested to be discovered by the first UE, the second UE may use the same security material to successfully verify the first discovery message broadcast by the first UE, thus achieving successful discovery with the first UE. Afterwards, the second UE may verify whether the role of the second UE is matched with the role of the first UE, to ensure whether a connection is established with the first UE subsequently.

Therefore, with the method for authorizing the role of the UE provided in the embodiments of the present invention, the first UE will send the discovery request message to the network device, and the discovery request message is used to request the authorized role for the first UE. Afterwards, the first UE will receive the discovery response message sent by the network device, and the discovery response message includes the role determined by the network device for the first UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2e is a flow chart of a method for authorizing a role of a UE provided in an embodiment of the present invention. The method is performed by the first UE. As shown in Fig. 2e, the method for authorizing the role of the UE may include the following steps.

In step 201e, a second discovery message broadcast by a second UE is received. The second discovery message is protected by security material corresponding to a service requested to be discovered by the second UE, and the second discovery message includes a role of the second UE.

In step 202e, the second discovery message is decoded and verified, and in response to a successful verification, it is determined whether the role of the second UE is matched with a role of the first UE.

The security material may be used to verify the second discovery message, and the principle of this part may refer to the description of the above embodiments.

Further, it should be noted that in a case where the service requested to be discovered by the second UE is the same as the service requested to be discovered by the first UE, if the role of the first UE is matched with the role of the second UE, it indicates that the first UE and the second UE are able to complete the service requested by the two UEs. On this basis, after the first UE decodes and verifies the second discovery message, it can further determine whether the role of the first UE is matched with the role of the second UE, to know whether the first UE and the second UE are able to complete the service requested by the two UEs. If the service will be completed, the two UEs may perform a discovery process to establish a connection. If the service cannot be completed, the discovery process is ignored.

Further, in an embodiment of the present invention, the above-mentioned role of the first UE is matched with the role of the second UE in the service requested to be discovered by the two UEs, which can be understood as that the role of the first UE and the role of the second UE cooperate with each other to complete the service requested to be discovered by the two UEs. For the ranging service, the two roles that can cooperate with each other to complete the ranging service are generally the target UE and the reference UE. For the sidelink positioning service, the two roles that can cooperate with each other to complete the sidelink positioning service are generally the located UE and the target UE. On this basis, when the service requested to be discovered by the two UEs is ranging service 1, if the role of the first UE is a target UE, and the role of the second UE is a reference UE, it indicates that the role of the first UE is matched with the role of the second UE in the service requested to be discovered by the two UEs.

In another embodiment of the present invention, the role of the first UE is not matched with the role of the second UE in the service requested to be discovered by the two UEs. This may be understood as that the role of the first UE and the role of the second UE are unable to cooperate with each other to complete the service requested by the two UEs. For example, assuming that the service requested to be discovered by the two UEs is ranging service 1, the role of the first UE is a target UE, and the role of the second UE is also a target UE, it indicates that the role of the first UE is not matched with the role of the second UE in the service requested to be discovered by the two UEs.

In step 203e, a first response message is sent to the second UE in response to the role of the first UE being matched with the role of the second UE. The first response message is protected by the security material corresponding to the service requested to be discovered by the first UE, and the first response message includes the role of the first UE.

The above steps 201e-203e constitute the discovery process of the first UE and the second UE. After the two UEs discover each other, they can establish a connection to realize the service.

Therefore, with the method for authorizing the role of the UE provided in the embodiments of the present invention, the first UE sends the discovery request message to the network device, and the discovery request message is used to request the authorized role for the first UE. Afterwards, the first UE receives the discovery response message sent by the network device, and the discovery response message includes the role determined by the network device for the first UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

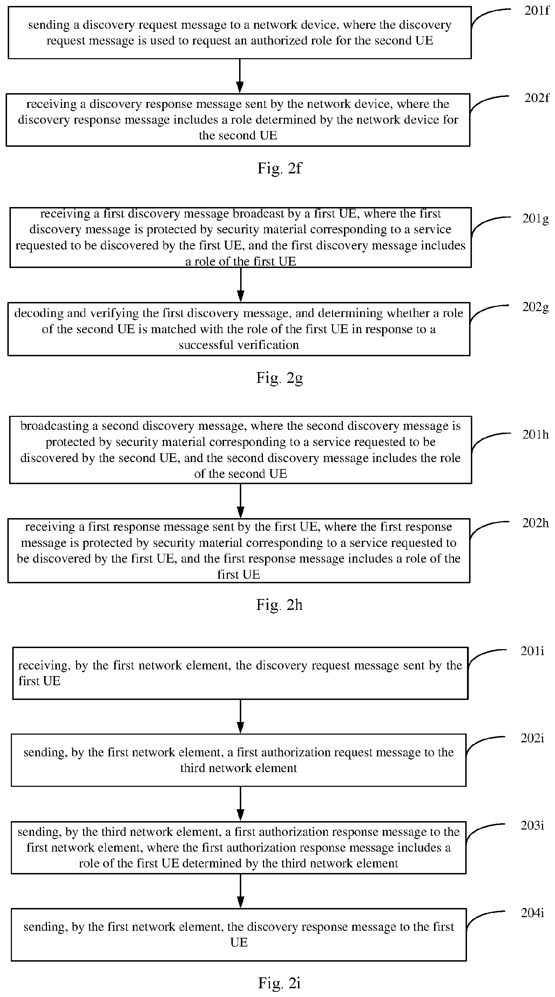

Fig. 2f is a flow chart of a method for authorizing a role of a UE provided in an embodiment of the present invention. The method is performed by a second UE. As shown in Fig. 2f, the method for authorizing the role of the UE may include the following steps.

In step 201f, a discovery request message is sent to a network device. The discovery request message is used to request an authorized role for the second UE.

In step 202f, a discovery response message sent by the network device is received. The discovery response message includes a role determined by the network device for the second UE.

Therefore, with the method for authorizing the role of the UE provided in the embodiments of the present invention, the second UE may send the discovery request message to the network device. The discovery request message is used to request the authorized role for the second UE. The second UE may receive the discovery response message sent by the network device. The discovery response message includes the role determined by the network device for the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2g is a flow chart of a method for authorizing a role of a UE provided in an embodiment of the present invention. The method is performed by the second UE. As shown in Fig. 2g, the method for authorizing the role of the UE may include the following steps.

In step 201g, a first discovery message broadcast by a first UE is received. The first discovery message is protected by security material corresponding to a service requested to be discovered by the first UE, and the first discovery message includes a role of the first UE.

In step 202g, the first discovery message is decoded and verified, and in response to a successful verification, it is determined whether the role of the second UE is matched with the role of the first UE.

Therefore, with the method for authorizing the role of the UE provided in the embodiments of the present invention, the second UE sends the discovery request message to the network device, and the discovery request message is used to request the authorized role for the second UE. Afterwards, the second UE receives the discovery response message sent by the network device, and the discovery response message includes the role determined by the network device for the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2h is a flow chart of a method for authorizing a role of a UE provided in an embodiment of the present invention. The method is performed by the second UE. As shown in Fig. 2h, the method for authorizing the role of the UE may include the following steps.

In step 201h, a second discovery message is broadcast. The second discovery message is protected by security material corresponding to a service requested to be discovered by the second UE, and the second discovery message includes a role of the second UE.

In step 202h, a first response message sent by the first UE is received. The first response message is protected by security material corresponding to a service requested to be discovered by the first UE, and the first response message includes a role of the first UE.

Therefore, with the method for authorizing the role of the UE provided in the embodiments of the present invention, the second UE will send the discovery request message to the network device, and the discovery request message is used to request the authorized role for the second UE. Afterwards, the second UE will receive the discovery response message sent by the network device, and the discovery response message includes the role determined by the network device for the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Further, in an embodiment of the present invention, the above network device includes: a first network element, a second network element and a third network element. The first network element includes a direct discovery name management function (DDNMF) network element or a proximity service key management function (PKMF) network element of the first UE. The second network element includes a DDNMF network element or a PKMF network element of the second UE. The third network element includes a proximity service server or a unified data management (UDM) network element. On this basis, specific steps for interactions among the first network element, the second network element, the third network element, the first UE and the second UE are described below.

Fig. 2i is an interaction flow chart of flow of a method for authorizing a role of a UE provided in an embodiment of the present invention. The method for authorizing the role of the UE may include the following steps.

In step 2011, the first network element receives a discovery request message sent by the first UE.

In step 202i, the first network element sends a first authorization request message to the third network element.

In step 203i, the third network element sends a first authorization response message to the first network element, where the first authorization response message includes the role of the first UE determined by the third network element.

In step 204i, the first network element sends a discovery response message to the first UE.

The above steps will be described in detail in the subsequent embodiments.

Therefore, the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

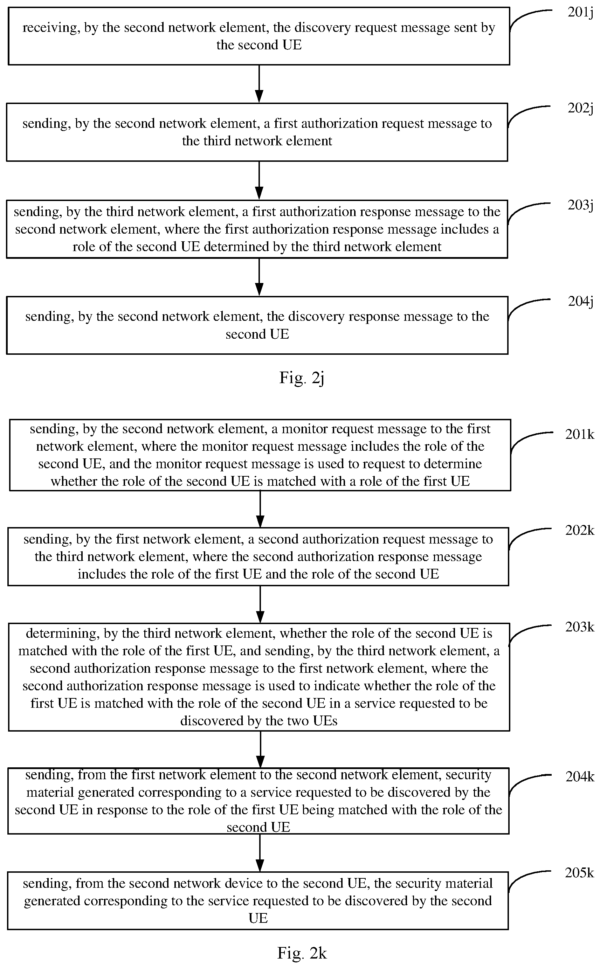

Fig. 2j is an interaction flow chart of flow of a method for authorizing a role of a UE provided in an embodiment of the present invention. The method for authorizing the role of the UE may include the following steps.

In step 201j, the second network element receives a discovery request message sent by the second UE.

In step 202j, the second network element sends a first authorization request message to the third network element.

In step 203j, the third network element sends a first authorization response message to the second network element, where the first authorization response message includes the role of the second UE determined by the third network element.

In step 204j, the second network element sends a discovery response message to the second UE.

The above steps will be described in detail in the subsequent embodiments.

Therefore, the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Fig. 2k is an interaction flow chart of flow of a method for authorizing a role of a UE provided in an embodiment of the present invention. The method for authorizing the role of the UE may include the following steps.

In step 201k, the second network element sends a monitor request message to the first network element. The monitor request message includes the role of the second UE, and the monitor request message is used to request to determine whether the role of the second UE is matched with the role of the first UE.

In step 202k, the first network element sends a second authorization request message to the third network element. The second authorization response message includes the role of the first UE and the role of the second UE.

In step 203k, the third network element determines whether the role of the second UE is matched with the role of the first UE, and sends a second authorization response message to the first network element. The second authorization response message is used to indicate whether the role of the first UE is matched with the role of the second UE in a service requested to be discovered by the two UEs.

In step 204k, in response to the role of the first UE being matched with the role of the second UE, the first network element sends security material generated corresponding to a service requested to be discovered by the second UE to the second network element.

In step 205k, the second network device sends the security material generated corresponding to the service requested to be discovered by the second UE to the second UE.

The above steps will be described in detail in the subsequent embodiments.

Therefore, the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Further, the above-mentioned method for authorizing the role of the UE is described from the perspective of the network device, the first UE and the second UE. However, it can be seen from the above contents that the network device may include the DDNMF network element or the PKMF network element of the first UE, the DDNMF network element or the PKMF network element of the second UE, and the third network element including the proximity service server or the UDM network element. On this basis, the method of the present invention is further described from individual perspectives of the DDNMF network element of or the PKMF network element of the first UE, the DDNMF network element or the PKMF network element of the second UE, and the server or the UDM network element, as well as a perspective of the first UE interacting with the DDNMF/PKMF network element, and a perspective of the second UE interacting with the DDNMF/PKMF network element for the method for authorizing the role of the UE.

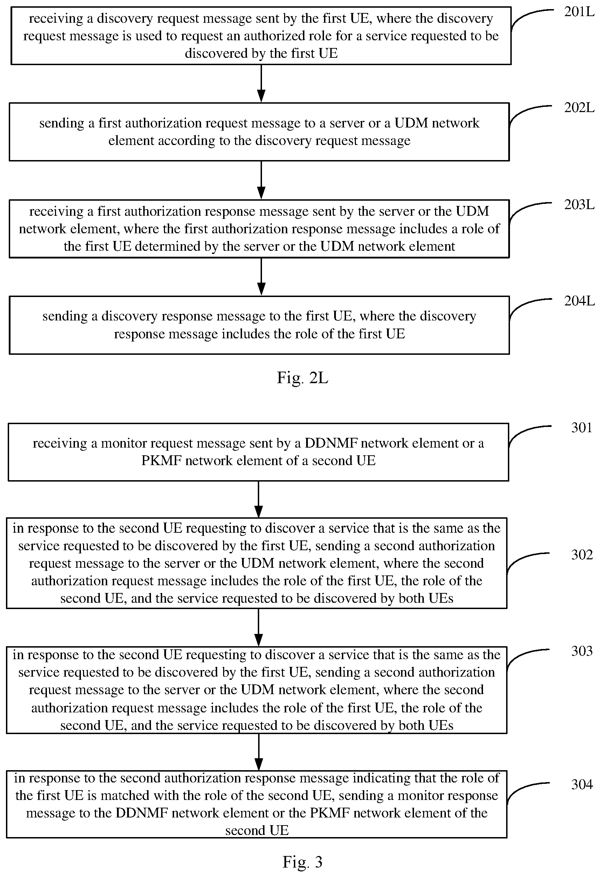

Fig. 2L is a flow chart of a method for authorizing a role of a UE provided in an embodiment of the present invention. The method is performed by a DDNMF network element or a PKMF network element of a first UE. As shown in Fig. 2, the method for authorizing the role of the UE may include the following steps.

In step 201L, a discovery request message sent by the first UE is received. The discovery request message is used to request an authorized role for a service requested to be discovered by the first UE.

In an embodiment of the present invention,

In step 202L, a first authorization request message is sent to a server or a unified data management (UDM) network element according to the discovery request message.

Specifically, in an embodiment of the present invention, sending the first authorization request message to the server or the UDM network element according to the discovery request message includes: converting a ranging application user identifier (RAUID) corresponding to the first UE into a first identifier recognizable by the server or the UDM network element, where the first identifier is used to indicate the first UE; and sending the first authorization request message containing at least one of the first identifier, the service requested to be discovered by the first UE, and a capability of the first UE to the server or UDM network element.

Further, in an embodiment of the present invention, the server may be, for example, a ranging or sidelink positioning server.

In step 203L, a first authorization response message sent by the server or the UDM network element is received. The first authorization response message includes a role of the first UE determined by the server or the UDM network element.

The role of the first UE may be, for example, determined by the server or UDM network element according to the capability of the first UE and role(s) allowed for the first UE in the service requested to be discovered by the first UE. Specifically, the role of the first UE may be, for example, among the role(s) allowed for the first UE in the service requested to be discovered by the first UE, the role determined by the capability of the first UE. For example, assuming that the roles supported by the capability of the first UE are the target UE and the server UE, the role allowed for the first UE in the service requested to be discovered by the first UE is the target UE, in this case, the role of the first UE is the target UE. A detailed introduction on how the server or UDM network element determines the role of the first UE in this part will be described in the subsequent implementation examples of the server or UDM network element.

It should be noted that, in an embodiment of the present invention, when the server or UDM network element is unable to determine the role of the first UE according to the capability of the first UE and the role(s) allowed for the first UE in the service requested to be discovered by the first UE (i.e., the role(s) allowed for the first UE in the service requested to be discovered by the first UE does not include the role supported by the capability of the first UE), the first authorization response message may be used to indicate an authorization failure and/or a reason for the authorization failure of the server or UDM network element.

In step 204L, a discovery response message is sent to the first UE. The discovery response message includes a role of the first UE.

In an embodiment of the present invention, the discovery response message may further include security material (i.e., discovery security material) generated by the DDNMF network element of the first UE or the PKMF network element of the first UE for the service requested to be discovered by the first UE. The security material is used to perform security protection on a subsequent discovery process of other UEs performed by the first UE, to ensure that when the first UE transmits the role of the first UE in the subsequent discovery process, the unrelated UE is unable to monitor or tamper with the role of the first UE, thus preventing the unrelated UE from impersonating the role of the first UE to deceive the opposite UE of the first UE, avoiding interference from other unrelated UEs in the subsequent service execution process, and improving the accuracy of the service execution and the information security.

Furthermore, in an embodiment of the present invention, when the DDNMF network element of the first UE or the PKMF network element of the first UE receives the role of the first UE, the DDNMF network element of the first UE or the PKMF network element of the first UE will further determine an application code corresponding to the service to be executed by the first UE, and carry the application code corresponding to the service to be executed by the first UE in the discovery response message and send it to the first UE. The application code may be used for the first UE to discover other UEs that perform the same service as the first UE according to the application code.

In addition, in an embodiment of the present invention, when the first authorization response message received by the DDNMF network element of the first UE or the PKMF network element of the first UE indicates an authorization failure, the DDNMF network element of the first UE or the PKMF network element of the first UE will not generate the security material and the application code, and will send the discovery response message to the first UE to indicate rejection of the discovery request of the first UE.

Therefore, with the method for authorizing the role of the UE provided in the embodiments of the present invention, the DDNMF network element or the PKMF network element of the first UE may receive the discovery request message sent by the first UE. The discovery request message is used to request the authorized role for the service requested to be discovered by the first UE. Afterwards, the DDNMF network element or the PKMF network element of the first UE may send the first authorization request message to the server or the UDM network element according to the discovery request message, and receive the first authorization response message sent by the server or the UDM network element. The first authorization response message includes the role of the first UE determined by the server or the UDM network element. Finally, the DDNMF network element or the PKMF network element of the first UE may send the discovery response message to the first UE. The discovery response message includes the role of the first UE and the security material generated by the DDNMF network element or the PKMF network element of the first UE for the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor or tamper with the role of the first UE, thus preventing the unrelated UE from impersonating the role of the first UE, avoiding interference from the unrelated UE in the subsequent service execution process, improving the accuracy of the service execution and the information security.

Fig. 3 is a flow chart of a method for authorizing a role of a UE provided in an embodiment of the present invention. The method is performed by a DDNMF network element or a PKMF network element of a first UE. As shown in Fig. 3, the method for authorizing the role of the UE may include the following steps.

In step 301, a monitor request message sent by a DDNMF network element or a PKMF network element of a second UE is received.

In an embodiment of the present invention, the monitor request message may be sent to the DDNMF network element or the PKMF network element of the first UE after the DDNMF network element or the PKMF network element of the second UE obtains the role of the second UE determined by the server or the UDM network element. The monitor request message includes at least one of the role of the second UE, the service requested to be discovered by the second UE, and the second identifier used to indicate the second UE. The specific process for the DDNMF network element or the PKMF network element of the second UE to obtain the role of the second UE determined by the server or the UDM network element is similar to the specific process for the DDNMF network element or the PKMF network element of the first UE to obtain the role of the first UE, and will be described in the following implementation examples of the DDNMF network element or the PKMF network element of the second UE.

In step 302, in response to the second UE requesting to discover a service that is the same as the service requested to be discovered by the first UE, a second authorization request message is sent to the server or the UDM network element, where the second authorization request message includes the role of the first UE, the role of the second UE, and the service requested to be discovered by both UEs.

In an embodiment of the present invention, in a case where the service requested to be discovered by the second UE is the same as the service requested to be discovered by the first UE, if the role of the first UE is matched with the role of the second UE, it indicates that the first UE and the second UE are able to complete the service requested to be discovered by the two UEs. On this basis, when the DDNMF network element or PKMF network element of the first UE determines that the service requested to be discovered by the second UE is the same as the service requested to be discovered by the first UE, a second authorization request message is sent to the server or the UDM network element, so that the server or the UDM network element can determine whether the role of the first UE is matched with the role of the second UE, to know whether the first UE and the second UE are able to complete the service requested by the two UEs. If the service will be completed, the two UEs may perform a discovery process to establish a connection. If the service cannot be completed, the discovery process is ignored.

Further, in an embodiment of the present invention, the above-mentioned role of the first UE is matched with the role of the second UE in the service requested to be discovered by the two UEs, which can be understood as that the role of the first UE and the role of the second UE cooperate with each other to complete the service requested to be discovered by the two UEs. For the ranging service, the two roles that can cooperate with each other to complete the ranging service are generally the target UE and the reference UE. For the sidelink positioning service, the two roles that can cooperate with each other to complete the sidelink positioning service are generally the located UE and the target UE. On this basis, when the service requested to be discovered by the two UEs is ranging service 1, if the role of the first UE is a target UE, and the role of the second UE is a reference UE, it indicates that the role of the first UE is matched with the role of the second UE in the service requested to be discovered by the two UEs.

In another embodiment of the present invention, the role of the first UE is not matched with the role of the second UE in the service requested to be discovered by the two UEs. This may be understood as that the role of the first UE and the role of the second UE are unable to cooperate with each other to complete the service requested by the two UEs. For example, assuming that the service requested to be discovered by the two UEs is ranging service 1, the role of the first UE is a target UE, and the role of the second UE is also a target UE, it indicates that the role of the first UE is not matched with the role of the second UE in the service requested to be discovered by the two UEs.

In step 303, a second authorization response message sent by the server or the UDM network element is received. The second authorization response message is used to indicate whether the role of the first UE is matched with the role of the second UE in the service requested to be discovered by the two UEs.

In step 304, in response to the second authorization response message indicating that the role of the first UE is matched with the role of the second UE, a monitor response message is sent to the DDNMF network element or the PKMF network element of the second UE.

In an embodiment of the present invention, the monitoring response message contains the security material generated by the DDNMF network element or the PKMF network element of the first UE for the same service requested to be discovered by the first UE, so that the security material corresponding to the service requested to be discovered by the second UE is the same as the security material corresponding to the service requested to be discovered by the first UE.

It should be noted that, in an embodiment of the present invention, when the role of the first UE is matched with the role of the second UE, it indicates that the first UE and the second UE can cooperate with each other to complete the service requested to be discovered by the two UEs. In this case, the DDNMF network element or the PKMF network element of the first UE should generate the same discovery security material for the service requested to be discovered by the second UE as the discovery security material generated for the service requested to be discovered by the first UE, so that the second UE can subsequently successfully verify the information transmitted by the first UE during the discovery process based on the same discovery security material, thus ensuring that the two UEs can successfully discover each other and successfully complete the service requested to be discovered by the two UEs.

In addition, in an embodiment of the present invention, when the second authorization response message received by the DDNMF network element or the PKMF network element of the first UE from the server or the UDM network element indicates that the role of the first UE is not matched with the role of the second UE in the service requested to be discovered by the two UEs, the DDNMF network element or the PKMF network element of the first UE should send a monitoring response message indicating rejection of the monitor request to the DDNMF network element or the PKMF network element of the second UE.

Therefore, with the method for authorizing the role of the UE provided in the embodiments of the present invention, the DDNMF network element or the PKMF network element of the first UE may receive the discovery request message sent by the first UE. The discovery request message is used to request the authorized role for the service requested to be discovered by the first UE. Afterwards, the DDNMF network element or the PKMF network element of the first UE may send the first authorization request message to the server or the UDM network element according to the discovery request message, and receive the first authorization response message sent by the server or the UDM network element. The first authorization response message includes the role of the first UE determined by the server or the UDM network element. Finally, the DDNMF network element or the PKMF network element of the first UE may send the discovery response message to the first UE. The discovery response message includes the role of the first UE and the security material generated by the DDNMF network element or the PKMF network element of the first UE for the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor or tamper with the role of the first UE, thus preventing the unrelated UE from impersonating the role of the first UE, avoiding interference from the unrelated UE in the subsequent service execution process, improving the accuracy of the service execution and the information security.

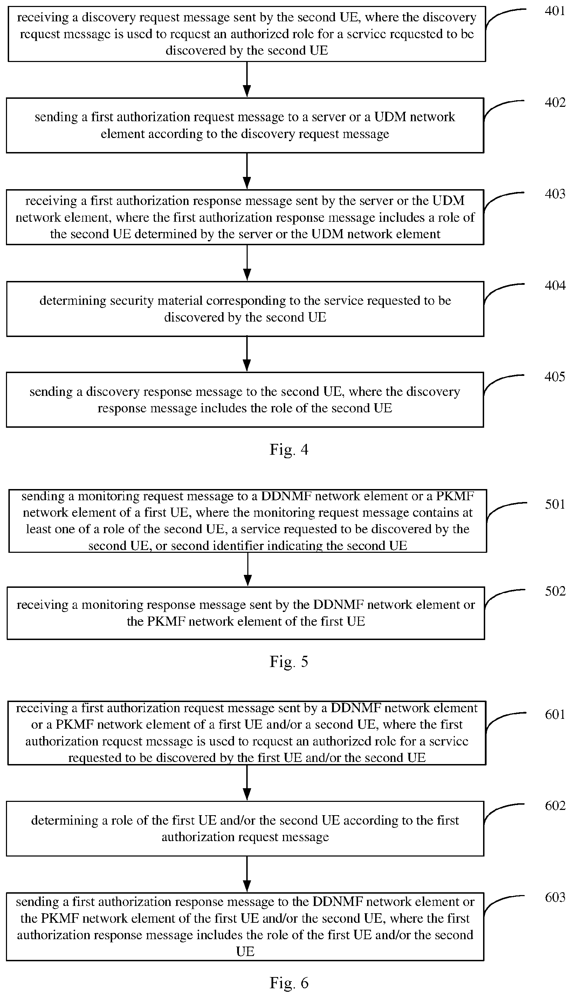

Fig. 4 is a flow chart of a method for authorizing a role of a UE provided in an embodiment of the present invention. The method is performed by a DDNMF network element or a PKMF network element of a second UE. As shown in Fig. 4, the method for authorizing the role of the UE may include the following steps.

In step 401, a discovery request message sent by the second UE is received. The discovery request message is used to request an authorized role for a service requested to be discovered by the second UE.

Optionally, in an embodiment of the present invention, the discovery request message includes at least one of an RAUID corresponding to the second UE; a service requested to be discovered by the second UE; or a capability of the second UE.

The RAUID is used to identify the UE so that the network device knows which UE sends the discovery request message.

In step 402, a first authorization request message is sent to a server or a unified data management (UDM) network element according to the discovery request message.

Optionally, sending the first authorization request message to the server or the UDM network element according to the discovery request message includes: converting an RAUID corresponding to the second UE into a second identifier recognizable by the server or the UDM network element, where the second identifier is used to indicate the second UE; and sending the authorization request message containing at least one of the second identifier, the service requested to be discovered by the second UE, and a capability of the second UE to the server or the UDM network element.

In step 403, a first authorization response message sent by the server or the UDM network element is received. The first authorization response message includes a role of the second UE determined by the server or the UDM network element.

Optionally, in an embodiment of the present invention, the role of the second UE is determined by the server or the UDM network element according to the capability of the second UE and role(s) that can be allowed for the second UE in the service requested to be discovered by the second UE.

In step 404, the security material corresponding to the service requested to be discovered by the second UE is determined.

The security material corresponding to the service requested to be discovered by the second UE should be the same as the security material corresponding to the service requested to be discovered by the first UE. Determination of the security material corresponding to the service requested to be discovered by the second UE in this step may refer to the description of the subsequent embodiments.

In step 405, a discovery response message is sent to the second UE. The discovery response message includes a role of the second UE.

The discovery response message may further include the security material generated by the DDNMF network element or the PKMF network element of the second UE for the service requested to be discovered by the second UE.

The principle of the above steps 401 to 403 and 405 are similar to the principle of steps 201 to 204 in the aforementioned embodiments of Fig. 2, and for other matters, reference may be made to the description of the aforementioned embodiments.

Therefore, with the method for authorizing the role of the UE provided in the embodiments of the present invention, the DDNMF network element or the PKMF network element of the second UE may receive the discovery request message sent by the second UE. The discovery request message is used to request the authorized role for the service requested to be discovered by the second UE. Afterwards, the DDNMF network element or the PKMF network element of the second UE may send the first authorization request message to the server or the UDM network element according to the discovery request message, and receive the first authorization response message sent by the server or the UDM network element. The first authorization response message includes the role of the second UE determined by the server or the UDM network element. The DDNMF network element or the PKMF network element of the second UE may determine the security material generated corresponding to the service requested to be discovered by the second UE. Finally, the DDNMF network element or the PKMF network element of the second UE may send the discovery response message to the second UE. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

Fig. 5 is a flow chart of a method for authorizing a role of a UE provided in an embodiment of the present invention. The method is performed by the DDNMF network element or the PKMF network element of the second UE. As shown in Fig. 5, the method for authorizing the role of the UE may include the following steps.

In step 501, a monitoring request message is sent to a DDNMF network element or a PKMF network element of a first UE. The monitoring request message contains at least one of a role of the second UE, a service requested to be discovered by the second UE, or second identifier indicating the second UE.

It should be noted that, in an embodiment of the present invention, the second UE actually knows which UE the opposite UE (i.e., the first UE) is. On this basis, when the second UE sends the discovery request message to the DDNMF network element or the PKMF network element of the second UE, it may further carry indication information indicating the first UE or indicating the DDNMF network element or PKMF network element of the first UE in the discovery request message, so that the DDNMF network element or the PKMF network element of the second UE can determine, based on the indication information, to which UE's DDNMF network element or PKMF network element it needs to send the monitor request message, thus ensuring that the DDNMF network element or PKMF network element of the second UE can successfully send the monitor request message to the DDNMF network element or PKMF network element of the first UE.

In step 502, a monitoring response message sent by the DDNMF network element or the PKMF network element of the first UE is received.

In an embodiment of the present invention, the monitoring response message contains the security material corresponding to the service requested to be discovered by the second UE. The security material is sent to the DDNMF network element or the PKMF network element of the second UE after the DDNMF network element or the PKMF network element of the first UE receives the second authorization response message (which indicates that the role of the first UE is matched with the role of the second UE) sent by the server or the UDM network element to, and the security material corresponding to the service requested to be discovered by the second UE is the same as the security key corresponding to the service requested to be discovered by the first UE.

For a detailed description of steps 501 to 502, reference may be made to the aforementioned embodiments, which will not be elaborated here.

Therefore, with the method for authorizing the role of the UE provided in the embodiments of the present invention, the DDNMF network element or the PKMF network element of the second UE may receive the discovery request message sent by the second UE. The discovery request message is used to request the authorized role for the service requested to be discovered by the second UE. Afterwards, the DDNMF network element or the PKMF network element of the second UE may send the first authorization request message to the server or the UDM network element according to the discovery request message, and receive the first authorization response message sent by the server or the UDM network element. The first authorization response message includes the role of the second UE determined by the server or the UDM network element. The DDNMF network element or the PKMF network element of the second UE may determine the security material generated corresponding to the service requested to be discovered by the second UE. Finally, the DDNMF network element or the PKMF network element of the second UE may send the discovery response message to the second UE. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

Fig. 6 is a flow chart of a method for authorizing a role of a UE provided in an embodiment of the present invention. The method is performed by a server or a UDM. As shown in Fig. 6, the method for authorizing the role of the UE may include the following steps.

In step 601, a first authorization request message sent by a DDNMF network element or a PKMF network element of a first UE and/or a second UE is received. The first authorization request message is used to request an authorized role for a service requested to be discovered by the first UE and/or the second UE.

Optionally, the first authorization request message includes at least one of an identifier used to indicate the first UE and/or the second UE; a service requested to be discovered by the first UE and/or the second UE; or a capability of the first UE and/or the second UE.

In step 602, a role of the first UE and/or the second UE is determined according to the first authorization request message.

Related introduction on how to determine the role of the first UE and/or the second UE in this step may refer to the description of the subsequent embodiments.

In step 603, a first authorization response message is sent to the DDNMF network element or the PKMF network element of the first UE and/or the second UE. The first authorization response message includes the role of the first UE and/or the second UE.

For a detailed principle introduction of steps 601 to 603, reference may be made to the description of the aforementioned embodiments.

Therefore, with the method for authorizing the role of the UE provided in the embodiments of the present invention, the server or the UDM network element may receive the first authorization request message sent by the DDNMF network element or PKMF network element of the first UE and/or the second UE, and the first authorization request message is used to request an authorized role for the service requested to be discovered by the first UE and/or the second UE. The role of the first UE and/or the second UE may be determined according to the first authorization request message. Thereafter, the server or the UDM network element may send the first authorization response message to the DDNMF network element or PKMF network element of the first UE and/or the second UE, and the first authorization response message includes the role of the first UE and/or the second UE. It can be seen that the present invention provides the method for authorizing the role for the first UE and/or the second UE in the service requested to be discovered, in which the role of the first UE and/or the second UE may be determined by the server or the UDM network element based on the capability of the first UE and/or the second UE and the role(s) allowed for the first UE and/or the second UE in the service requested to be discovered by the first UE and/or the second UE, thus ensuring that the role may be correctly authorized for the first UE and/or the second UE, and ensuring the accuracy of the service execution.

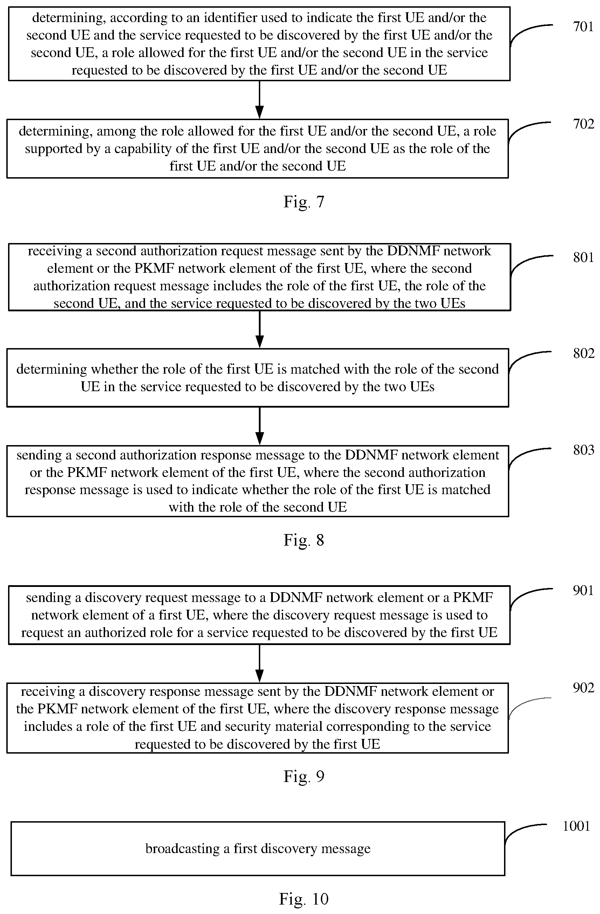

Fig. 7 is a flow chart of a method for authorizing a role of a UE provided in an embodiment of the present invention. The method is performed by the server or the UDM. As shown in Fig. 7, the method for authorizing the role of the UE may include the following steps.

In step 701, a role allowed for the first UE and/or the second UE in the service requested to be discovered by the first UE and/or the second UE is determined according to an identifier used to indicate the first UE and/or the second UE and the service requested to be discovered by the first UE and/or the second UE.

It should be noted that in an embodiment of the present invention, the role allowed for each UE in the ranging service and/or the sidelink positioning service may be registered in the service protocol of the server, or the role allowed for the corresponding UE in the ranging service and/or the sidelink positioning service may be registered in each UE subscription of the UDM. On this basis, the server may determine the role allowed for individual UE in the ranging service and/or the sidelink positioning service by searching the service protocol, and the UDM may determine the role allowed for individual UE in the ranging service and/or the sidelink positioning service by searching the UE subscription.

On this basis, the method for the server or the UDM to determine the role of the first UE is introduced as an example, and the method related to the second UE is similar.

Specifically, for example, the service requested to be discovered by the two UEs is the ranging service. In this case, the server finds out from the service protocol based on the identifier of the first UE that the roles allowed for the first UE in the ranging service are a target UE and a server UE, and/or the UDM may determine the subscription of the first UE based on the identifier of the first UE, and find out from the subscription of the first UE that the roles allowed for the first UE in the sidelink positioning service are a target UE and a server UE.

In step 702, among the role(s) allowed for the first UE and/or the second UE, a role supported by a capability of the first UE and/or the second UE is determined as the role of the first UE and/or the second UE.

For example, the first UE is still used as an example for explanation. Assuming that the server or the UDM network element determines that the roles supported by the first UE in the ranging service are the target UE and located UE according to the capability of the first UE, and the roles allowed by the first UE in the ranging service determined in step 701 are the target UE and the server UE, the server or the UDM network element may determine the role of the first UE to be the target UE.

In addition, it should be noted that in an embodiment of the present invention, among the roles allowed for the first UE, if multiple roles are supported by the capabilities of the first UE, the server or the UDM network element may determine all of the multiple roles as the roles of the first UE, that is, the first UE may have multiple roles.

Therefore, with the method for authorizing the role of the UE provided in the embodiments of the present invention, the server or the UDM network element may receive the first authorization request message sent by the DDNMF network element or PKMF network element of the first UE and/or the second UE, and the first authorization request message is used to request an authorized role for the service requested to be discovered by the first UE and/or the second UE. The role of the first UE and/or the second UE may be determined according to the first authorization request message. Thereafter, the server or the UDM network element may send the first authorization response message to the DDNMF network element or PKMF network element of the first UE and/or the second UE, and the first authorization response message includes the role of the first UE and/or the second UE. It can be seen that the present invention provides the method for authorizing the role for the first UE and/or the second UE in the service requested to be discovered, in which the role of the first UE and/or the second UE may be determined by the server or the UDM network element based on the capability of the first UE and/or the second UE and the role(s) allowed for the first UE and/or the second UE in the service requested to be discovered by the first UE and/or the second UE, thus ensuring that the role may be correctly authorized for the first UE and/or the second UE, and ensuring the accuracy of the service execution.

Fig. 8 is a flow chart of a method for authorizing a role of a UE provided in an embodiment of the present invention. The method is performed by the server or the UDM. As shown in Fig. 8, the method for authorizing the role of the UE may include the following steps.

In step 801, a second authorization request message sent by the DDNMF network element or the PKMF network element of the first UE is received. The second authorization request message includes the role of the first UE, the role of the second UE, and the service requested to be discovered by the two UEs.

In step 802, it is determined whether the role of the first UE is matched with the role of the second UE in the service requested to be discovered by the two UEs.

In step 803, a second authorization response message is sent to the DDNMF network element or the PKMF network element of the first UE. The second authorization response message is used to indicate whether the role of the first UE is matched with the role of the second UE.

For a detailed description of steps 801 to 803, reference may be made to the above embodiments.

Therefore, with the method for authorizing the role of the UE provided in the embodiments of the present invention, the server or the UDM network element may receive the first authorization request message sent by the DDNMF network element or PKMF network element of the first UE and/or the second UE, and the first authorization request message is used to request an authorized role for the service requested to be discovered by the first UE and/or the second UE. The role of the first UE and/or the second UE may be determined according to the first authorization request message. Thereafter, the server or the UDM network element may send the first authorization response message to the DDNMF network element or PKMF network element of the first UE and/or the second UE, and the first authorization response message includes the role of the first UE and/or the second UE. It can be seen that the present invention provides the method for authorizing the role for the first UE and/or the second UE in the service requested to be discovered, in which the role of the first UE and/or the second UE may be determined by the server or the UDM network element based on the capability of the first UE and/or the second UE and the role(s) allowed for the first UE and/or the second UE in the service requested to be discovered by the first UE and/or the second UE, thus ensuring that the role may be correctly authorized for the first UE and/or the second UE, and ensuring the accuracy of the service execution.

Fig. 9 is a flow chart of a method for authorizing a role of a UE provided in an embodiment of the present invention. The method is performed by the first UE. As shown in Fig. 9, the method for authorizing the role of the UE may include the following steps.

In step 901, a discovery request message is sent to a DDNMF network element or a PKMF network element of a first UE. The discovery request message is used to request an authorized role for a service requested to be discovered by the first UE.

In step 902, a discovery response message sent by the DDNMF network element or the PKMF network element of the first UE is received. The discovery response message includes a role of the first UE and security material corresponding to the service requested to be discovered by the first UE.

Therefore, with the method for authorizing the role of the UE provided in the embodiments of the present invention, the first UE may send the discovery request message to the DDNMF network element or the PKMF network element of the first UE. The discovery request message is used to request the authorized role for the service requested to be discovered by the first UE. The first UE may receive the discovery response message sent by the DDNMF network element or the PKMF network element of the first UE is received. The discovery response message includes the role of the first UE and the security material corresponding to the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor with the role of the first UE, thus preventing the unrelated UE from impersonating the role of the first UE, avoiding interference from the unrelated UE in the subsequent service execution process, improving the accuracy of the service execution and the information security.

Fig. 10 is a flow chart of a method for authorizing a role of a UE provided in an embodiment of the present invention. The method is performed by the first UE. As shown in Fig. 10, the method for authorizing the role of the UE may include the following step.

In step 1001, a first discovery message is broadcast. The first discovery message is protected by security material corresponding to a service requested to be discovered by the first UE, and the first discovery message includes a role of the first UE and an application code corresponding to the service requested to be discovered by the first UE.

In an embodiment of the present invention, the first UE will broadcast the first discovery message protected by the security material corresponding to the service requested to be discovered by the first UE. Based on the fact that the security material corresponding to the service requested to be discovered by the second UE is the same as the security material corresponding to the service requested to be discovered by the first UE, the second UE may use the same security material to successfully verify the first discovery message broadcast by the first UE, thus achieving successful discovery with the first UE. Afterwards, the second UE may verify whether the role of the second UE is matched with the role of the first UE, to ensure whether a connection is established with the first UE subsequently.

Therefore, with the method for authorizing the role of the UE provided in the embodiments of the present invention, the first UE may send the discovery request message to the DDNMF network element or the PKMF network element of the first UE. The discovery request message is used to request the authorized role for the service requested to be discovered by the first UE. The first UE may receive the discovery response message sent by the DDNMF network element or the PKMF network element of the first UE is received. The discovery response message includes the role of the first UE and the security material corresponding to the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor or tamper with the role of the first UE, thus preventing the unrelated UE from impersonating the role of the first UE, avoiding interference from the unrelated UE in the subsequent service execution process, improving the accuracy of the service execution and the information security.

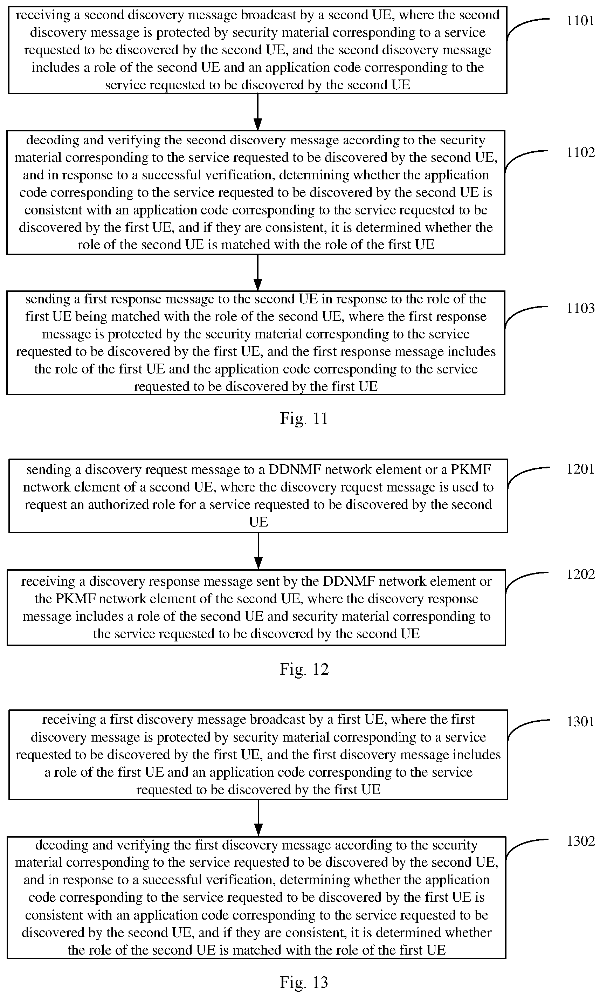

Fig. 11 is a flow chart of a method for authorizing a role of a UE provided in an embodiment of the present invention. The method is performed by the first UE. As shown in Fig. 11, the method for authorizing the role of the UE may include the following steps.

In step 1101, a second discovery message broadcast by a second UE is received. The second discovery message is protected by security material corresponding to a service requested to be discovered by the second UE, and the second discovery message includes a role of the second UE and an application code corresponding to the service requested to be discovered by the second UE.

In step 1102, the second discovery message is decoded and verified according to the security material corresponding to the service requested to be discovered by the second UE, and in response to a successful verification, it is determined whether the application code corresponding to the service requested to be discovered by the second UE is consistent with an application code corresponding to the service requested to be discovered by the first UE, and if they are consistent, it is determined whether the role of the second UE is matched with the role of the first UE.

The principle of the first UE using the security material to verify the second discovery message may refer to the description of the above embodiments. If the application code corresponding to the service requested to be discovered by the second UE is consistent with the application code corresponding to the service requested to be discovered by the first UE, it indicates that the services requested to be discovered by the two UEs are the same. In this case, it may be further determined whether the roles of the two UEs are matched to each other. If they match, it indicates that the two UEs are able to cooperate to complete the service requested to be discovered by the two UEs. If they do not match, it indicate that the two UEs are unable to complete the service requested to be discovered by the two UEs.

In step 1103, a first response message is sent to the second UE in response to the role of the first UE being matched with the role of the second UE. The first response message is protected by the security material corresponding to the service requested to be discovered by the first UE, and the first response message includes the role of the first UE and the application code corresponding to the service requested to be discovered by the first UE.

The above steps 1101-1103 constitute the discovery process of the first UE and the second UE. After the two UEs discover each other, they can establish a connection to realize the service.

Therefore, with the method for authorizing the role of the UE provided in the embodiments of the present invention, the first UE may send the discovery request message to the DDNMF network element or the PKMF network element of the first UE. The discovery request message is used to request the authorized role for the service requested to be discovered by the first UE. The first UE may receive the discovery response message sent by the DDNMF network element or the PKMF network element of the first UE is received. The discovery response message includes the role of the first UE and the security material corresponding to the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor with the role of the first UE, thus preventing the unrelated UE from impersonating the role of the first UE, avoiding interference from the unrelated UE in the subsequent service execution process, improving the accuracy of the service execution and the information security.

Fig. 12 is a flow chart of a method for authorizing a role of a UE provided in an embodiment of the present invention. The method is performed by the second UE. As shown in Fig. 12, the method for authorizing the role of the UE may include the following steps.

In step 1201, a discovery request message is sent to a DDNMF network element or a PKMF network element of a second UE. The discovery request message is used to request an authorized role for a service requested to be discovered by the second UE.

In step 1202, a discovery response message sent by the DDNMF network element or the PKMF network element of the second UE is received. The discovery response message includes a role of the second UE and security material corresponding to the service requested to be discovered by the second UE.

Therefore, with the method for authorizing the role of the UE provided in the embodiments of the present invention, the second UE may send the discovery request message to the DDNMF network element or the PKMF network element of the second t UE. The discovery request message is used to request the authorized role for the service requested to be discovered by the second UE. The second UE may receive the discovery response message sent by the DDNMF network element or the PKMF network element of the second UE is received. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

Fig. 13 is a flow chart of a method for authorizing a role of a UE provided in an embodiment of the present invention. The method is performed by the second UE. As shown in Fig. 13, the method for authorizing the role of the UE may include the following steps.

In step 1301, a first discovery message broadcast by a first UE is received. The first discovery message is protected by security material corresponding to a service requested to be discovered by the first UE, and the first discovery message includes a role of the first UE and an application code corresponding to the service requested to be discovered by the first UE.

In step 1302, the first discovery message is decoded and verified according to the security material corresponding to the service requested to be discovered by the second UE, and in response to a successful verification, it is determined whether the application code corresponding to the service requested to be discovered by the first UE is consistent with an application code corresponding to the service requested to be discovered by the second UE, and if they are consistent, it is determined whether the role of the second UE is matched with the role of the first UE.

Therefore, with the method for authorizing the role of the UE provided in the embodiments of the present invention, the second UE may send the discovery request message to the DDNMF network element or the PKMF network element of the second t UE. The discovery request message is used to request the authorized role for the service requested to be discovered by the second UE. The second UE may receive the discovery response message sent by the DDNMF network element or the PKMF network element of the second UE is received. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

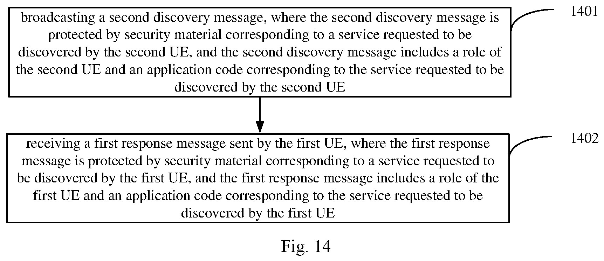

Fig. 14 is a flow chart of a method for authorizing a role of a UE provided in an embodiment of the present invention. The method is performed by the second UE. As shown in Fig. 14, the method for authorizing the role of the UE may include the following steps.

In step 1401, a second discovery message is broadcast. The second discovery message is protected by security material corresponding to a service requested to be discovered by the second UE, and the second discovery message includes a role of the second UE and an application code corresponding to the service requested to be discovered by the second UE.

In step 1402, a first response message sent by the first UE is received. The first response message is protected by security material corresponding to a service requested to be discovered by the first UE, and the first response message includes a role of the first UE and an application code corresponding to the service requested to be discovered by the first UE.

Therefore, with the method for authorizing the role of the UE provided in the embodiments of the present invention, the second UE may send the discovery request message to the DDNMF network element or the PKMF network element of the second t UE. The discovery request message is used to request the authorized role for the service requested to be discovered by the second UE. The second UE may receive the discovery response message sent by the DDNMF network element or the PKMF network element of the second UE is received. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

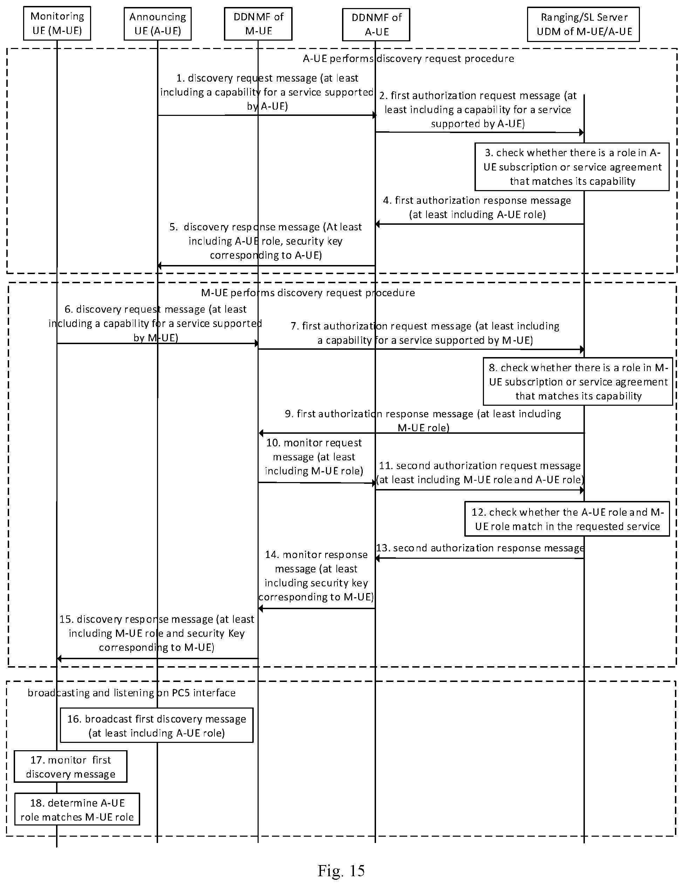

Fig. 15 is an interaction flow chart of a method for authorizing a role of a UE provided by an embodiment of the present invention. As shown in Fig. 15, the method includes the following steps.
1. A-UE (which may be the first UE in the above embodiments) sends a discovery request message containing an RAUID to its 5G DDNMF/PKMF to obtain the ranging application code to announce and obtain associated security material. In addition, the A-UE shall include its UE capability for ranging service (i.e., the "capability of the first UE" in the above embodiments, for example, the capability of acting as a target/server UE) in the discovery request message.
2. The 5G DDNMF/PKMF of the A-UE sends a first authorization request message to a ranging/SL positioning server or UDM of the A-UE for announcing authorization, which contains the UE's capability for ranging service received from the A-UE.
3. The ranging/SL positioning server checks against the service agreement or the UDM of the A-UE checks the A-UE's subscription to determine whether the A-UE is allowed to play role(s) corresponding to its capability (e.g., whether the A-UE is allowed to act as a target/server UE).
4. If there is a match between the UE capability and the allowed role(s) (for example, the A-UE is allowed to act as a target UE or the A-UE is allowed to act as both a target UE and a server UE), the ranging/SL positioning server or the UDM of the A-UE returns a first authorization response message containing the role of the A-UE to the 5G DDNMF/PKMF. If there is no match between the UE capability and the allowed role(s) (for example, the A-UE is neither allowed to act as a target UE nor a server UE), the ranging/SL positioning server or the UDM of the A-UE returns a first authorization response message containing a failure cause.
5. If the authorization with the ranging/SL positioning server or the UDM of A-UE is successful, the 5G DDNMF/PKMF of the A-UE returns the ranging application code and the corresponding security material in the discovery response message. The security material provides the A-UE with the necessary information to protect transmission of the ranging application code and is stored together with the ranging application code. The 5G DDNMF/PKMF of the A-UE also includes the role(s) of the A-UE received from the ranging/SL positioning server or the UDM of A-UE in the discovery response message. If the authorization with the ranging/SL positioning server or the UDM of the A-UE fails, the 5G DDNMF/PKMF of the A-UE does not generate the security material and rejects the discovery request from the A-UE.
6. M-UE (which may be the second UE in the above embodiments) sends a discovery request message containing an RAUID to its 5G DDNMF/PKMF to obtain a ranging application code to announce and obtain associated security material. In addition, the M-UE shall include its UE capability for ranging service (i.e., the "capability of the second UE" in the above embodiments, for example, the capability of acting as a reference/located UE) in the discovery request message.
7. The 5G DDNMF/PKMF of the M-UE sends a first authorization request message to a ranging/SL positioning server or UDM of the M-UE, which contains the UE capability for the ranging service received from the M-UE.
8. The ranging/SL positioning server checks a service agreement or the M-UE's UDM checks M-UE's subscription to determine whether the M-UE is allowed to play a role corresponding to its capability (e.g., whether the M-UE is allowed to act as a reference/located UE).
9. If there is a match between the UE capability and the allowed role(s) (for example, the M-UE is allowed to act as a reference UE or the A-UE is allowed to act as both a reference UE and a located UE), the ranging/SL positioning server or the UDM of the M-UE returns a first authorization response message to the 5G DDNMF/PKMF, which contains the role of the M-UE. If there is no match between the UE capability and the allowed role(s) (for example, the M-UE is neither allowed to act as a reference UE nor a located UE), the ranging/SL positioning server or the UDM of the M-UE returns a first authorization response message containing a failure cause.
10. If authorization with the ranging/SL positioning server or the UDM of the A-UE is successful, the 5G DDNMF/PKMF of the M-UE contacts the 5G DDNMF/PKMF of A-UE by sending a monitor request message. If the authorization with the ranging/SL positioning server or the UDM of the A-UE fails, the 5G DDNMF/PKMF of the M-UE rejects the discovery request of the M-UE and the following steps are not performed.
11. The 5G DDNMF/PKMF of the A-UE sends a second authorization request message to the ranging/SL positioning server, which includes the roles of the M-UE and the A-UE.
12. The ranging/SL positioning server checks whether the roles of the M-UE and the A-UE match each other in the requested service (for example, for the ranging service between two UEs, whether the roles of the two UEs are the target UE and the reference UE respectively, or whether they are located UE and target UE respectively. If so, they are used for the ranging/SL positioning service between the two UEs).
13. The ranging/SL positioning server returns a second authorization response message indicating whether the authorization is successful.
14. If the authorization with the ranging/SL positioning server is successful, the 5G DDNMF/PKMF of the A-UE responds to the 5G DDNMF/PKMF of the M-UE with a monitoring response message including the ranging application code and the corresponding security material (the security material is the same as the security material fed back to the A-UE). The security material provides information required by the M-UE to undo the protection applied by the A-UE (i.e., the information required to verify the message transmitted by the A-UE). If the authorization with the ranging/SL positioning server fails, the 5G DDNMF/PKMF of the A-UE rejects the monitor request message from the 5G DDNMF/PKMF of the M-UE and the following steps are not performed.
15. The 5G DDNMF/PKMF of the M-UE returns the security material in the discovery response message, as well as the role of the M-UE received from the ranging/SL positioning server or the UDM of the M-UE.
16. The A-UE starts to announce the first discovery message. The A-UE forms the first discovery message and protects it with the security material. The first discovery message also contains the authorized role of the A-UE.
17. The M-UE listens for the first discovery message and verifies the message with the security material.
18. The M-UE checks the role of the A-UE in the first discovery message and determines whether the role of the A-UE checked in the first discovery message is the role it monitors. For example, if the role of the A-UE is the target UE, the M-UE as the reference UE can determine that it has found a match.

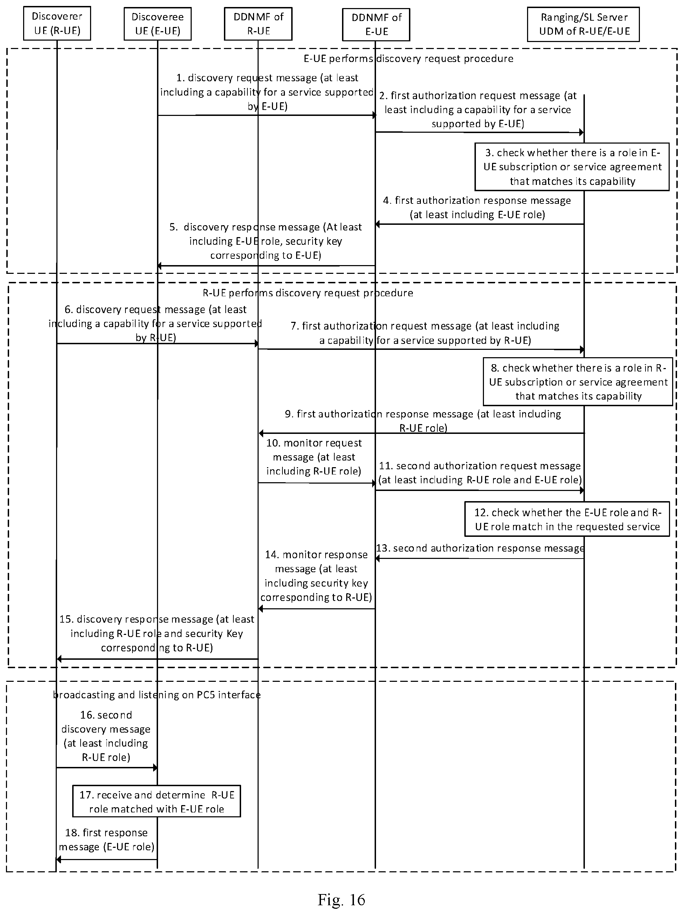

Fig. 16 is an interaction flow chart of a method for authorizing a role of a UE provided by an embodiment of the present invention. As shown in Fig. 16, the method includes the following steps.

Steps 1 to 15 of the embodiment of Fig. 16 are the same as steps 1 to 15 of Fig. 15. RUE in Fig. 16 may be the second UE mentioned above, and E-UE may be the first UE mentioned above.

16. The R-UE forms a second discovery message and protects it with the security material. The second discovery message also contains the role of the R-UE.

17. The E-UE listens for the second discovery message and verifies the second discovery message with the security material. The E-UE then checks the role of the R-UE in the second discovery message and determines whether the role of the R-UE in the second discovery message is matched with the role of the E-UE. If the role of the R-UE is the target UE, the E-UE as the located UE can determine that it has found a match.

18. The E-UE returns a first response message to the R-UE, which contains the role of the R-UE.

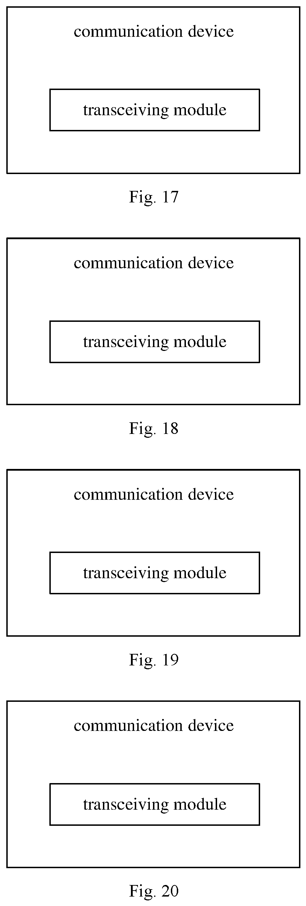

Fig. 17 is a block diagram of a communication device provided in an embodiment of the present invention. As shown in Fig. 17, the communication device includes: a transceiving module configured to: receive a discovery request message sent by a first UE and/or a second UE, where the discovery request message is used to request an authorized role for the first UE and/or the second UE; and send a discovery response message to the first UE and/or the second UE, where the discovery response message includes a role determined by the network device for the first UE and/or the second UE.

Therefore, with the communication device provided in the embodiments of the present invention, the network device receives the discovery request message sent by the first UE and/or the second UE, and the discovery request message is used to request the authorized role for the first UE and/or the second UE. The network device sends the discovery response message to the first UE and/or the second UE, and the discovery response message includes the role determined by the network device for the first UE and/or the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Optionally, in an embodiment of the present invention, the discovery request message includes at least one of: a ranging application user identifier (RAUID); a service identifier; or a capability of the first UE and/or the second UE.

Optionally, in an embodiment of the present invention, the device is further configured to determine a role of the first UE and/or the second UE according to a capability of the first UE and/or the second UE and contract information of the first UE and/or the second UE stored in the network device.

Optionally, in an embodiment of the present invention, the discovery response message further includes security material, generated by the network device, for a service requested to be discovered by the first UE and/or the second UE. Security material corresponding to the service requested to be discovered by the first UE is the same as security material corresponding to the service requested to be discovered by the second UE.

Optionally, in an embodiment of the present invention, the service includes a ranging service and/or a sidelink positioning service.

Optionally, in an embodiment of the present invention, the network device includes: a first network element, a second network element and a third network element. the first network element includes a direct discovery name management function (DDNMF) network element of the first UE or a proximity service key management function (PKMF) network element of the first UE, the second network element includes a DDNMF network element of the second UE or a PKMF network element of the second UE, and the third network element includes a proximity service server or a unified data management (UDM) network element.

Optionally, in an embodiment of the present invention, the first network element receives the discovery request message sent by the first UE. The first network element sends the discovery response message to the first UE. The first network element sends a first authorization request message to the third network element, and the third network element sends a first authorization response message to the first network element. The first authorization response message includes a role of the first UE determined by the third network element.

Optionally, in an embodiment of the present invention, the second network element receives the discovery request message sent by the second UE. The second network element sends the discovery response message to the second UE. The second network element sends a first authorization request message to the third network element, and the third network element sends a first authorization response message to the second network element. The first authorization response message includes a role of the second UE determined by the third network element.

Optionally, in an embodiment of the present invention, the second network element sends a monitor request message to the first network element. The monitor request message includes the role of the second UE, and the monitor request message is used to request to determine whether the role of the second UE is matched with a role of the first UE. The first network element sends a second authorization request message to the third network element. The second authorization response message includes the role of the first UE and the role of the second UE. The third network element determines whether the role of the second UE is matched with the role of the first UE, and sends a second authorization response message to the first network element. The second authorization response message is used to indicate whether the role of the first UE is matched with the role of the second UE in a service requested to be discovered by the two UEs. In response to the role of the first UE being matched with the role of the second UE, the first network element sends, to the second network element, security material generated corresponding to a service requested to be discovered by the second UE.

Fig. 18 is a block diagram of a communication device provided in an embodiment of the present invention. As shown in Fig. 18, the communication device includes: a transceiving module configured to: send a discovery request message to a network device, where the discovery request message is used to request an authorized role for the first UE; and receive a discovery response message sent by the network device, where the discovery response message includes a role determined by the network device for the first UE.

Therefore, with the communication device provided in the embodiments of the present invention, the first UE may send the discovery request message to the network device. The discovery request message is used to request the authorized role for the first UE. The first UE may receive the discovery response message sent by the network device. The discovery response message includes the role determined by the network device for the first UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Optionally, in an embodiment of the present invention, the device is further configured to broadcast a first discovery message. The first discovery message is protected by security material corresponding to a service requested to be discovered by the first UE, and the first discovery message includes a role of the first UE.

Optionally, in an embodiment of the present invention, the device is further configured to receive a second discovery message broadcast by a second UE, where the second discovery message is protected by security material corresponding to a service requested to be discovered by the second UE, and the second discovery message includes a role of the second UE; decode and verify the second discovery message, and determine whether the role of the second UE is matched with the role of the first UE in response to a successful verification; and send a first response message to the second UE in response to the role of the first UE being matched with the role of the second UE, where the first response message is protected by security material corresponding to a service requested to be discovered by the first UE, and the first response message includes the role of the first UE.

Fig. 19 is a block diagram of a communication device provided in an embodiment of the present invention. As shown in Fig. 19, the communication device includes: a transceiving module configured to: send a discovery request message to a network device, where the discovery request message is used to request an authorized role for the second UE; and receive a discovery response message sent by the network device, where the discovery response message includes a role determined by the network device for the second UE.

Therefore, with the communication device provided in the embodiments of the present invention, the second UE may send the discovery request message to the network device. The discovery request message is used to request the authorized role for the second UE. The second UE may receive the discovery response message sent by the network device. The discovery response message includes the role determined by the network device for the second UE. It can be seen that the present invention provides the method for authorizing the role of the UE in the service that the UE requests to discover, in which the role of the UE may be determined by the network device according to the capability of the UE and the contract information of the UE, to ensure that the role may be correctly authorized for the UE, and to ensure the accuracy of the service execution. Further, the security material corresponding to the service requested to be discovered by the UE is sent to the UE, the security material may be used to perform the security protection on the subsequent discovery process of other UE performed by the UE, to ensure that when the UE transmits the role of the UE in the subsequent discovery process, the unrelated UE is unable to monitor or tamper with the role of the UE, thus preventing the unrelated UE from impersonating the role of the UE, avoiding interference from the unrelated UE in the subsequent service execution process, improving the accuracy of the service execution and the information security.

Optionally, in an embodiment of the present invention, the device is further configured to: receive a first discovery message broadcast by a first UE, where the first discovery message is protected by security material corresponding to a service requested to be discovered by the first UE, and the first discovery message includes a role of the first UE; and decode and verify the first discovery message, and determine whether a role of the second UE is matched with the role of the first UE in response to a successful verification.

Optionally, in an embodiment of the present invention, the device is further configured to: broadcast a second discovery message, where the second discovery message is protected by security material corresponding to a service requested to be discovered by the second UE, and the second discovery message includes the role of the second UE; and receive a first response message sent by the first UE, where the first response message is protected by security material corresponding to a service requested to be discovered by the first UE, and the first response message includes a role of the first UE.

Fig. 20 is a block diagram of a communication device provided in an embodiment of the present invention. As shown in Fig. 20, the communication device includes: a transceiving module configured to: a transceiving module configured to: receive a discovery request message sent by the first UE, where the discovery request message is used to request an authorized role for a service requested to be discovered by the first UE; send a first authorization request message to a server or a unified data management (UDM) network element according to the discovery request message; receive a first authorization response message sent by the server or the UDM network element, where the first authorization response message includes a role of the first UE determined by the server or the UDM network element; and send a discovery response message to the first UE, where the discovery response message includes the role of the first UE.

Therefore, with the communication device provided in the embodiments of the present invention, the DDNMF network element or the PKMF network element of the first UE may receive the discovery request message sent by the first UE. The discovery request message is used to request the authorized role for the service requested to be discovered by the first UE. Afterwards, the DDNMF network element or the PKMF network element of the first UE may send the first authorization request message to the server or the UDM network element according to the discovery request message, and receive the first authorization response message sent by the server or the UDM network element. The first authorization response message includes the role of the first UE determined by the server or the UDM network element. Finally, the DDNMF network element or the PKMF network element of the first UE may send the discovery response message to the first UE. The discovery response message includes the role of the first UE and the security material generated by the DDNMF network element or the PKMF network element of the first UE for the service requested to be discovered by the first UE. It can be seen that the present invention provides the method for authorizing the role in the service that the first UE requests to discover, in which the role of the first UE may be determined by the server or the UDM network element according to the capability of the first UE and the role(s) allowed for the first UE in the service requested to be discovered by the first UE, to ensure that the role may be correctly authorized for the first UE, and to ensure the accuracy of the service execution. Further, the security material corresponding to the service requested to be discovered by the first UE is sent to the first UE, the security material may be used to perform the security protection on the subsequent discovery process of other UE performed by the first UE, to ensure that when the first UE transmits the role of the first UE in the subsequent discovery process, the unrelated UE is unable to monitor or tamper with the role of the first UE, thus preventing the unrelated UE from impersonating the role of the first UE, avoiding interference from the unrelated UE in the subsequent service execution process, improving the accuracy of the service execution and the information security.

Optionally, in an embodiment of the present invention, the transceiving module is further configured to: convert an RAUID corresponding to the first UE into a first identifier recognizable by the server or the UDM network element, where the first identifier is used to indicate the first UE; and send the first authorization request message containing at least one of the first identifier, the service requested to be discovered by the first UE, or a capability of the first UE to the server or the UDM network element.

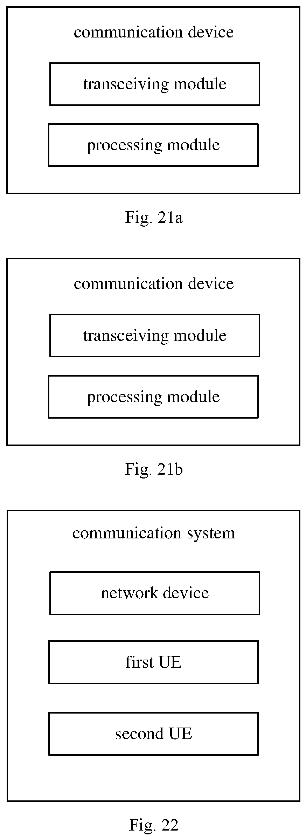

Fig. 21a is a block diagram of a communication device provided in an embodiment of the present invention. As shown in Fig. 21a, the communication device includes: a transceiving module configured to: receive a discovery request message sent by the second UE, where the discovery request message is used to request an authorized role for a service requested to be discovered by the second UE, send a first authorization request message to a server or a unified data management (UDM) network element according to the discovery request message, receive a first authorization response message sent by the server or the UDM network element, where the first authorization response message includes a role of the second UE determined by the server or the UDM network element; and a processing module configured to determine security material corresponding to the service requested to be discovered by the second UE. The transceiving module is further configured to send a discovery response message to the second UE, where the discovery response message includes the role of the second UE.

Therefore, with the communication device provided in the embodiments of the present invention, the DDNMF network element or the PKMF network element of the second UE may receive the discovery request message sent by the second UE. The discovery request message is used to request the authorized role for the service requested to be discovered by the second UE. Afterwards, the DDNMF network element or the PKMF network element of the second UE may send the first authorization request message to the server or the UDM network element according to the discovery request message, and receive the first authorization response message sent by the server or the UDM network element. The first authorization response message includes the role of the second UE determined by the server or the UDM network element. The DDNMF network element or the PKMF network element of the second UE may determine the security material generated corresponding to the service requested to be discovered by the second UE. Finally, the DDNMF network element or the PKMF network element of the second UE may send the discovery response message to the second UE. The discovery response message includes the role of the second UE and the security material corresponding to the service requested to be discovered by the second UE. It can be seen that the present invention provides the method for authorizing the role in the service that the second UE requests to discover, in which the role of the second UE may be determined by the server or the UDM network element according to the capability of the second UE and the role(s) allowed for the second UE in the service requested to be discovered by the second UE, to ensure that the role may be correctly authorized for the second UE, and to ensure the accuracy of the service execution. Further, the security material corresponding to the service requested to be discovered by the second UE is sent to the second UE, the security material may be used to successfully verify the information transmitted by the first UE during the discovery process based on the same discovery security material, thereby ensuring that the two UEs can successfully discover each other and successfully complete the service requested to be discovered by the two UEs. Since other UEs are unable to know the security material, interference from other unrelated UEs during the subsequent service execution is avoided, thus improving the accuracy of service execution and the information security.

Optionally, in an embodiment of the present invention, the transceiving module is further configured to: convert an RAUID corresponding to the second UE into a second identifier recognizable by the server or the UDM network element, where the second identifier is used to indicate the second UE; and send the authorization request message containing at least one of the second identifier, the service requested to be discovered by the second UE, or a capability of the second UE to the server or the UDM network element.

Optionally, in an embodiment of the present invention, the device is further configured to: send a monitoring request message to a DDNMF network element or a PKMF network element of the first UE, where the monitoring request message contains the role of the second UE, the monitoring request message is used to request to determine whether the role of the second UE is matched with a role of the first UE; and receive a monitoring response message sent by the DDNMF network element or the PKMF network element of the first UE, where the monitoring response message contains the security material corresponding to the service requested to be discovered by the second UE, where the security material corresponding to the service requested to be discovered by the second UE is the same as security material corresponding to a service requested to be discovered by the first UE.

Fig. 21b is a block diagram of a communication device provided in an embodiment of the present invention. As shown in Fig. 21b, the communication device includes: a transceiving module configured to receive a first authorization request message sent by a DDNMF network element or a PKMF network element of a first UE and/or a second UE, where the first authorization request message is used to request an authorized role for a service requested to be discovered by the first UE and/or the second UE; and a processing module configured to determine a role of the first UE and/or the second UE according to the first authorization request message. The transceiving module is further configured to send a first authorization response message to the DDNMF network element or the PKMF network element of the first UE and/or the second UE, where the first authorization response message includes the role of the first UE and/or the second UE.

Therefore, with the communication device provided in the embodiments of the present invention, the server or the UDM network element may receive the first authorization request message sent by the DDNMF network element or PKMF network element of the first UE and/or the second UE, and the first authorization request message is used to request an authorized role for the service requested to be discovered by the first UE and/or the second UE. The role of the first UE and/or the second UE may be determined according to the first authorization request message. Thereafter, the server or the UDM network element may send the first authorization response message to the DDNMF network element or PKMF network element of the first UE and/or the second UE, and the first authorization response message includes the role of the first UE and/or the second UE. It can be seen that the present invention provides the method for authorizing the role for the first UE and/or the second UE in the service requested to be discovered, in which the role of the first UE and/or the second UE may be determined by the server or the UDM network element based on the capability of the first UE and/or the second UE and the role(s) allowed for the first UE and/or the second UE in the service requested to be discovered by the first UE and/or the second UE, thus ensuring that the role may be correctly authorized for the first UE and/or the second UE, and ensuring the accuracy of the service execution.

Optionally, in an embodiment of the present invention, the processing module is further configured to determine, according to contract information of the first UE and/or the second UE, a role allowed for the first UE and/or the second UE in the service requested to be discovered by the first UE and/or the second UE; and determine, among the role allowed for the first UE and/or the second UE, a role supported by a capability of the first UE and/or the second UE as the role of the first UE and/or the second UE.

Optionally, in an embodiment of the present invention, the device is further configured to receive a second authorization request message sent by the DDNMF network element or the PKMF network element of the first UE, where the second authorization request message includes the role of the first UE, the role of the second UE, and the service requested to be discovered by the two UEs; determine whether the role of the first UE is matched with the role of the second UE in the service requested to be discovered by the two UEs; and send a second authorization response message to the DDNMF network element or the PKMF network element of the first UE, where the second authorization response message is used to indicate whether the role of the first UE is matched with the role of the second UE.

Fig. 22 is a block diagram of a communication system provided in an embodiment of the present invention. As shown in Fig. 22, the communication system may include: a first UE configured to send a discovery request message; a second UE configured to send a discovery request message; a network device configured to send a discovery response message, where the discovery response message includes a role determined by the network device for the first UE and/or the second UE. The first UE is further configured to receive the discovery response message, where the discovery response message includes a role determined by the network device for the first UE. The second UE is further configured to receive the discovery response message, where the discovery response message includes the role determined by the network device for the second UE.

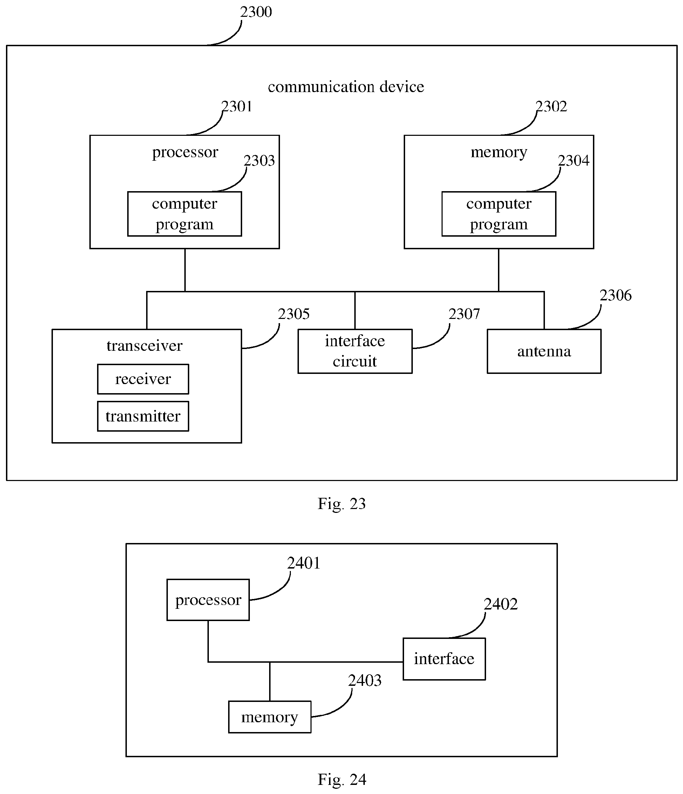

Referring to Fig. 23, which is a block diagram of a communication device 2300 provided in an embodiment of the present invention, the communication device 2300 may be a base station, may also be a terminal device, may also be a chip, a chip system, or a processor that supports the base station to implement the above methods, and may also be a chip, a chip system, or a processor that supports the terminal device to implement the above methods. The device may be configured to implement the methods as described in the above method embodiments, and for details thereof, reference may be made to the descriptions in the above method embodiments.

The communication device 2300 may include one or more processors 2301. The processor 2301 may be a general-purpose processor or a special-purpose processor. For example, the processor 2301 may be a baseband processor or a central processing unit. The baseband processor may be configured to process a communication protocol and communication data, and the central processing unit may be configured to control a communication device (such as a base station, a baseband chip, a terminal device, a terminal device chip, a DU, a CU, or the like), execute computer programs, and process data of computer programs.

Optionally, the communication device 2300 may further include one or more memories 2302 having stored therein a computer program 2304. The processor 2301 executes the computer program 2304, to cause the communication device 2300 to implement the methods as described in the above method embodiments. Optionally, the memory 2302 may have stored therein data. The communication device 2300 and the memory 2302 may be provided separately or integrated together.

Optionally, the communication device 2300 may further include a transceiver 2305 and an antenna 2306. The transceiver 2305 may be called a transceiving element, a transceiving machine, a transceiving circuit or the like, for implementing a transceiving function. The transceiver 2305 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 2300 may further include one or more interface circuits 2307. The interface circuit 2307 is configured to receive a code instruction and transmit the code instruction to the processor 2301. The processor 2301 runs the code instruction to enable the communication device 2300 to execute the methods as described in the above method embodiments.

In an implementation, the processor 2301 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor 2301 may have stored therein a computer program 2303 that, when running on the processor 2301, causes the communication device 2300 to implement the methods as described in the above method embodiments. The computer program 2303 may be embedded in the processor 2301, and in this case, the processor 2301 may be implemented by hardware.

In an implementation, the communication device 2300 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the base station or the terminal device, but the scope of the communication device described in the present invention is not limited thereto, and a structure of the communication device is not limited by Fig. 23. The communication device may be a stand-alone device or may be a part of a larger device. For example, the communication device may be: (1) a stand-alone integrated circuit (IC), or a chip, or a chip system or subsystem; (2) a set of one or more ICs, in which optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, reference may be made to a schematic diagram of the chip shown in Fig. 24. The chip shown in Fig. 24 includes a processor 2401 and an interface 2402. In the chip, one or more processors 2401 may be provided, and more than one interface 2402 may be provided.

Optionally, the chip further includes a memory 2403 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as extending beyond the protection scope of the embodiments of the present invention.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as an infrared manner, a cordless manner, via microwave, or the like). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art can understand that the first, second, and other numeral numbers involved in the present invention are distinguished only for convenience of description, and are not intended to limit the scope of the embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of precedence or size.

The correspondence shown in each table in the present invention may be configured or predefined. The values of information in each table are just examples, and may be configured as other values, which are not limited in the present invention. When configuring a correspondence between the information and various parameters, it is not necessary to configure all the correspondences shown in the tables. For example, the correspondences shown in some rows of the tables in the present invention may not be configured. For another example, appropriate variations or adjustments (such as splitting, merging, and so on) can be made based on the above tables. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present invention may be understood as definition, predefinition, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such an implementation should not be considered as extending beyond the scope of the present invention.

Those skilled in the art can clearly understand that for the convenience and brevity of the description, for the specific working process of the above-described system, device and unit, reference may be made to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for authorizing a role of a user equipment (UE), performed by a network device, comprising:
receiving a discovery request message sent by a first UE and/or a second UE, wherein the discovery request message is used to request an authorized role for the first UE and/or the second UE; and
sending a discovery response message to the first UE and/or the second UE, wherein the discovery response message comprises a role determined by the network device for the first UE and/or the second UE.

2. The method according to claim 1, wherein the discovery request message comprises at least one of:
a ranging application user identifier (RAUID);
a service identifier; or
a capability of the first UE and/or the second UE.

3. The method according to claim 1 or 2, further comprising:
determining a role of the first UE and/or the second UE according to a capability of the first UE and/or the second UE and contract information of the first UE and/or the second UE stored in the network device.

4. The method according to any one of claims 1 to 3, wherein the discovery response message further comprises security material, generated by the network device, for a service requested to be discovered by the first UE and/or the second UE, wherein security material corresponding to the service requested to be discovered by the first UE is the same as security material corresponding to the service requested to be discovered by the second UE.

5. The method according to any one of claims 1 to 4, wherein the service comprises a ranging service and/or a sidelink positioning service.

6. The method according to any one of claims 1 to 5, wherein the network device comprises: a first network element, a second network element and a third network element, wherein the first network element comprises a direct discovery name management function (DDNMF) network element of the first UE or a proximity service key management function (PKMF) network element of the first UE, the second network element comprises a DDNMF network element of the second UE or a PKMF network element of the second UE, and the third network element comprises a proximity service server or a unified data management (UDM) network element.

7. The method according to claim 6, wherein
receiving, by the network device, the discovery request message sent by the first UE comprises:
receiving, by the first network element, the discovery request message sent by the first UE;
sending, by the network device, the discovery response message to the first UE comprises:
sending, by the first network element, the discovery response message to the first UE; and
the method further comprises:
sending, by the first network element, a first authorization request message to the third network element, and
sending, by the third network element, a first authorization response message to the first network element, wherein the first authorization response message comprises a role of the first UE determined by the third network element.

8. The method according to claim 6, wherein
receiving, by the network device, the discovery request message sent by the second UE comprises:
receiving, by the second network element, the discovery request message sent by the second UE;
sending, by the network device, the discovery response message to the second UE comprises:
sending, by the second network element, the discovery response message to the second UE; and
the method further comprises:
sending, by the second network element, a first authorization request message to the third network element, and
sending, by the third network element, a first authorization response message to the second network element, wherein the first authorization response message comprises a role of the second UE determined by the third network element.

9. The method according to claim 8, further comprising:
sending, by the second network element, a monitor request message to the first network element, wherein the monitor request message comprises the role of the second UE, and the monitor request message is used to request to determine whether the role of the second UE is matched with a role of the first UE;
sending, by the first network element, a second authorization request message to the third network element, wherein the second authorization response message comprises the role of the first UE and the role of the second UE; and
determining, by the third network element, whether the role of the second UE is matched with the role of the first UE, and sending, by the third network element, a second authorization response message to the first network element, wherein the second authorization response message is used to indicate whether the role of the first UE is matched with the role of the second UE in a service requested to be discovered by the two UEs; and
sending, from the first network element to the second network element, security material generated corresponding to a service requested to be discovered by the second UE in response to the role of the first UE being matched with the role of the second UE.

10. A method for authorizing a role of a user equipment (UE), performed by a first UE, comprising:
sending a discovery request message to a network device, wherein the discovery request message is used to request an authorized role for the first UE; and
receiving a discovery response message sent by the network device, wherein the discovery response message comprises a role determined by the network device for the first UE.

11. The method according to claim 10, further comprising:
broadcasting a first discovery message, wherein the first discovery message is protected by security material corresponding to a service requested to be discovered by the first UE, and the first discovery message comprises a role of the first UE.

12. The method according to claim 10, further comprising:
receiving a second discovery message broadcast by a second UE, wherein the second discovery message is protected by security material corresponding to a service requested to be discovered by the second UE, and the second discovery message comprises a role of the second UE;
decoding and verifying the second discovery message, and determining whether the role of the second UE is matched with the role of the first UE in response to a successful verification; and
sending a first response message to the second UE in response to the role of the first UE being matched with the role of the second UE, wherein the first response message is protected by security material corresponding to a service requested to be discovered by the first UE, and the first response message comprises the role of the first UE.

13. A method for authorizing a role of a user equipment (UE), performed by a second UE, comprising:
sending a discovery request message to a network device, wherein the discovery request message is used to request an authorized role for the second UE; and
receiving a discovery response message sent by the network device, wherein the discovery response message comprises a role determined by the network device for the second UE.

14. The method according to claim 13, further comprising:
receiving a first discovery message broadcast by a first UE, wherein the first discovery message is protected by security material corresponding to a service requested to be discovered by the first UE, and the first discovery message comprises a role of the first UE; and
decoding and verifying the first discovery message, and determining whether a role of the second UE is matched with the role of the first UE in response to a successful verification.

15. The method according to claim 13, further comprising:
broadcasting a second discovery message, wherein the second discovery message is protected by security material corresponding to a service requested to be discovered by the second UE, and the second discovery message comprises the role of the second UE; and
receiving a first response message sent by the first UE, wherein the first response message is protected by security material corresponding to a service requested to be discovered by the first UE, and the first response message comprises a role of the first UE.

16. A method for authorizing a role of a user equipment (UE), performed by a direct discovery name management function (DDNMF) network element or a proximity service key management function (PKMF) network element of a first UE, comprising:
receiving a discovery request message sent by the first UE, wherein the discovery request message is used to request an authorized role for a service requested to be discovered by the first UE;
sending a first authorization request message to a server or a unified data management (UDM) network element according to the discovery request message;
receiving a first authorization response message sent by the server or the UDM network element, wherein the first authorization response message comprises a role of the first UE determined by the server or the UDM network element; and
sending a discovery response message to the first UE, wherein the discovery response message comprises the role of the first UE.

17. The method according to claim 16, wherein sending the first authorization request message to the server or the UDM network element according to the discovery request message comprises:
converting a ranging application user identifier (RAUID) corresponding to the first UE into a first identifier recognizable by the server or the UDM network element, wherein the first identifier is used to indicate the first UE; and
sending the first authorization request message containing at least one of the first identifier, the service requested to be discovered by the first UE, or a capability of the first UE to the server or the UDM network element.

18. A method for authorizing a role of a user equipment (UE), performed by a direct discovery name management function (DDNMF) network element or a proximity service key management function (PKMF) network element of a second UE, comprising:
receiving a discovery request message sent by the second UE, wherein the discovery request message is used to request an authorized role for a service requested to be discovered by the second UE;
sending a first authorization request message to a server or a unified data management (UDM) network element according to the discovery request message;
receiving a first authorization response message sent by the server or the UDM network element, wherein the first authorization response message comprises a role of the second UE determined by the server or the UDM network element;
determining security material corresponding to the service requested to be discovered by the second UE; and
sending a discovery response message to the second UE, wherein the discovery response message comprises the role of the second UE.

19. The method according to claim 18, wherein sending the first authorization request message to the server or the UDM network element according to the discovery request message comprises:
converting a ranging application user identifier (RAUID) corresponding to the second UE into a second identifier recognizable by the server or the UDM network element, wherein the second identifier is used to indicate the second UE; and
sending the authorization request message containing at least one of the second identifier, the service requested to be discovered by the second UE, or a capability of the second UE to the server or the UDM network element.

20. The method according to claim 18, further comprising:
sending a monitoring request message to a DDNMF network element or a PKMF network element of the first UE, wherein the monitoring request message contains the role of the second UE, the monitoring request message is used to request to determine whether the role of the second UE is matched with a role of the first UE; and
receiving a monitoring response message sent by the DDNMF network element or the PKMF network element of the first UE, wherein the monitoring response message contains the security material corresponding to the service requested to be discovered by the second UE, wherein the security material corresponding to the service requested to be discovered by the second UE is the same as security material corresponding to a service requested to be discovered by the first UE.

21. A method for authorizing a role of a user equipment (UE), performed by a server or a unified data management (UDM), comprising:
receiving a first authorization request message sent by a direct discovery name management function (DDNMF) network element or a proximity service key management function (PKMF) network element of a first UE and/or a second UE, wherein the first authorization request message is used to request an authorized role for a service requested to be discovered by the first UE and/or the second UE;
determining a role of the first UE and/or the second UE according to the first authorization request message; and
sending a first authorization response message to the DDNMF network element or the PKMF network element of the first UE and/or the second UE, wherein the first authorization response message comprises the role of the first UE and/or the second UE.

22. The method according to claim 21, wherein determining the role of the first UE and/or the second UE according to the first authorization request message comprises:
determining, according to contract information of the first UE and/or the second UE, a role allowed for the first UE and/or the second UE in the service requested to be discovered by the first UE and/or the second UE; and
determining, among the role allowed for the first UE and/or the second UE, a role supported by a capability of the first UE and/or the second UE as the role of the first UE and/or the second UE.

23. The method according to claim 21, further comprising:
receiving a second authorization request message sent by the DDNMF network element or the PKMF network element of the first UE, wherein the second authorization request message comprises the role of the first UE, the role of the second UE, and the service requested to be discovered by the two UEs;
determining whether the role of the first UE is matched with the role of the second UE in the service requested to be discovered by the two UEs; and
sending a second authorization response message to the DDNMF network element or the PKMF network element of the first UE, wherein the second authorization response message is used to indicate whether the role of the first UE is matched with the role of the second UE.

24. A communication device, applied in a network device, comprising:
a transceiving module configured to:
receive a discovery request message sent by a first UE and/or a second UE, wherein the discovery request message is used to request an authorized role for the first UE and/or the second UE; and
send a discovery response message to the first UE and/or the second UE, wherein the discovery response message comprises a role determined by the network device for the first UE and/or the second UE.

25. A communication device, applied in a first UE, comprising:
a transceiving module configured to:
send a discovery request message to a network device, wherein the discovery request message is used to request an authorized role for the first UE; and
receive a discovery response message sent by the network device, wherein the discovery response message comprises a role determined by the network device for the first UE.

26. A communication device, applied in a second UE, comprising:
a transceiving module configured to:
send a discovery request message to a network device, wherein the discovery request message is used to request an authorized role for the second UE; and
receive a discovery response message sent by the network device, wherein the discovery response message comprises a role determined by the network device for the second UE.

27. A communication device, applied in a direct discovery name management function (DDNMF) network element or a proximity service key management function (PKMF) network element of a first UE, comprising:
a transceiving module configured to:
receive a discovery request message sent by the first UE, wherein the discovery request message is used to request an authorized role for a service requested to be discovered by the first UE;
send a first authorization request message to a server or a unified data management (UDM) network element according to the discovery request message;
receive a first authorization response message sent by the server or the UDM network element, wherein the first authorization response message comprises a role of the first UE determined by the server or the UDM network element; and
send a discovery response message to the first UE, wherein the discovery response message comprises the role of the first UE.

28. A communication device, applied in a direct discovery name management function (DDNMF) network element or a proximity service key management function (PKMF) network element of a second UE, comprising:
a transceiving module configured to:
receive a discovery request message sent by the second UE, wherein the discovery request message is used to request an authorized role for a service requested to be discovered by the second UE,
send a first authorization request message to a server or a unified data management (UDM) network element according to the discovery request message,
receive a first authorization response message sent by the server or the UDM network element, wherein the first authorization response message comprises a role of the second UE determined by the server or the UDM network element; and
a processing module configured to determine security material corresponding to the service requested to be discovered by the second UE;
wherein the transceiving module is further configured to send a discovery response message to the second UE, wherein the discovery response message comprises the role of the second UE.

29. A communication device, applied in a server or a unified data management (UDM), comprising:
a transceiving module configured to receive a first authorization request message sent by a direct discovery name management function (DDNMF) network element or a proximity service key management function (PKMF) network element of a first UE and/or a second UE, wherein the first authorization request message is used to request an authorized role for a service requested to be discovered by the first UE and/or the second UE; and
a processing module configured to determine a role of the first UE and/or the second UE according to the first authorization request message;
wherein the transceiving module is further configured to send a first authorization response message to the DDNMF network element or the PKMF network element of the first UE and/or the second UE, wherein the first authorization response message comprises the role of the first UE and/or the second UE.

30. A communication device, comprising:
a processor; and
a memory having stored therein a computer program that, when executed by the processor, causes the device to perform the method according to any one of claims 1 to 9, any one of claims 10 to 12, any one of claims 13 to 15, any one of claims 16 to 17, any one of claims 18 to 20, or any one of claims 21 to 23.

31. A communication device, comprising: a processor and an interface circuit, wherein the interface circuit is configured to receive code instructions and transmit the code instructions to the processor; and
the processor is configured to run the code instructions to implement the method according to any one of claims 1 to 9, any one of claims 10 to 12, any one of claims 13 to 15, any one of claims 16 to 17, any one of claims 18 to 20, or any one of claims 21 to 23.

32. A communication system, comprising:
a first user equipment (UE) configured to send a discovery request message;
a second UE configured to send a discovery request message; and
a network device configured to send a discovery response message, wherein the discovery response message comprises a role determined by the network device for the first UE and/or the second UE;
wherein the first UE is further configured to receive the discovery response message, wherein the discovery response message comprises the role determined by the network device for the first UE;
the second UE is further configured to receive the discovery response message, wherein the discovery response message comprises the role determined by the network device for the second UE.

33. A computer-readable storage medium having stored therein instructions that, when executed, cause the method according to any one of claims 1 to 9, any one of claims 10 to 12, any one of claims 13 to 15, any one of claims 16 to 17, any one of claims 18 to 20, or any one of claims 21 to 23 to be implemented.
